# EUROPÄISCHE PATENTSCHRIFT

(11) **EP 1 926 622 B1**
(45) Veröffentlichungstag und Bekanntmachung des Hinweises auf die Patenterteilung: **23.06.2010**
(21) Anmeldenummer: 06793026.3
(22) Anmeldetag: 28.08.2006

(54) **ANTRIEBSSYSTEM FÜR EIN LANDWIRTSCHAFTLICHES ODER INDUSTRIELLES NUTZFAHRZEUG**
DRIVE SYSTEM FOR AN AGRICULTURAL OR INDUSTRIAL UTILITY VEHICLE
SYSTEME D'ENTRAINEMENT POUR UN VEHICULE UTILITAIRE INDUSTRIEL OU AGRICOLE

(30) Priorität: 15.09.2005 DE 102005044179
(43) Veröffentlichungstag der Anmeldung: 04.06.2008
(73) Patentinhaber: Deere & Company, Moline, IL 61265-8098 (US)
(72) Erfinder: TARASINSKI, Nicolai, 67227 Frankenthal (DE); GUGEL, Rainer, 68163 Mannheim (DE)
(74) Vertreter: Holst, Sönke
(86) Internationale Anmeldenummer: PCT/EP2006/065725
(87) Internationale Veröffentlichungsnummer: WO 2007/031399

(56) Entgegenhaltungen:
- EP-A1- 0 812 720
- EP-A2- 1 063 152
- EP-A2- 1 232 892
- EP-A2- 1 466 773
- WO-A-2005/090108
- US-A1- 2002 160 873

## Beschreibung

Die Erfindung betrifft ein Antriebssystem für ein landwirtschaftliches oder industrielles Nutzfahrzeug, vorzugsweise für einen Traktor. Das Antriebssystem umfasst eine ein mechanisches Drehmoment erzeugende Antriebsbaugruppe, eine erste, zweite und dritte elektrische Maschine, eine zum Antreiben mindestens einer Fahrzeugachse dienende erste mechanische Ausgangsschnittstelle und eine zweite mechanische Ausgangsschnittstelle. Eine elektrische Maschine weist einen Rotor auf, welcher drehfest mit einer Welle verbunden ist. Eine von der Antriebsbaugruppe angetriebene Welle steht mit der Welle der ersten elektrischen Maschine in Drehverbindung. Mit der zweiten Ausgangsschnittstelle ist ein an das Nutzfahrzeug ankoppelbares Arbeitsgerät mechanisch betreibbar. Die Welle der zweiten elektrischen Maschine und/oder die Welle der dritten elektrischen Maschine ist reversibel mit der ersten mechanischen Ausgangsschnittstelle verbindbar. Des Weiteren betrifft die vorliegende Erfindung eine Statoranordnung einer elektrischen Maschine und ein landwirtschaftliches oder industrielles Nutzfahrzeug, insbesondere ein Traktor mit einem solchen Antriebssystem.

Unter einer Antriebsbaugruppe im Sinn der vorliegenden Erfindung ist insbesondere ein Motor, ein Verbrennungsmotor, ein Dieselmotor oder eine Brennstoffzelle zu verstehen.

Zum Antreiben von Fahrzeugen werden in zunehmendem Maße Elektromotoren verwendet, die ihre Energie beispielsweise aus verbrennungsmotorgetriebenen Generatoren, Batterien oder Brennstoffzellen beziehen. Zum Erzielen einer höheren Spreizung werden den Elektromotoren in manchen Fällen schaltbare Getriebestufen nachgeordnet, meist erfolgt die Leistungsübertragung aber ohne Schaltstufen. Unter dem Begriff der Spreizung versteht man den Geschwindigkeitsbereich, über den die Nennleistung am Abtrieb erreichbar ist.

Bei Straßen- und Schienenfahrzeugen reicht die bislang im Stand der Technik beschriebene Vorgehensweise zum Erzielen der gewünschten Fahrleistung in der Regel aus. Die Spreizung liegt hier in der Größenordnung von 5 bis 10. Die kleinste Geschwindigkeit, bei der die Nennleistung erreicht wird, liegt häufig über 20km/h. Bei landwirtschaftlichen Nutzfahrzeugen und insbesondere bei Traktoren reicht diese Spreizung nicht aus. Es sind Werte von über 15 erforderlich, um die Antriebsaufgaben eines Traktors abzudecken. Die kleinste Geschwindigkeit, bei der die Nennleistung erreicht wird, liegt in der Nähe von 3 km/h. Wegen der kleinen Absolutgeschwindigkeit und hohen Zugkraft von Traktoren sind Schaltvorgänge, mit denen in einen anderen Geschwindigkeitsbereich bei ähnlicher Zugkraft geschaltet werden muss, aufgrund des im Antriebssystem vorliegenden Übersetzungssprungs sehr unkomfortabel und bewirkt einen Schaltruck.

Zudem sind Traktoren in Gegensatz zu Straßen- und Schienenfahrzeugen in der Regel zusätzlich zum Fahrantrieb mit einem oder mehreren weiteren mechanischen Abtrieben für Anbaugeräte, einer so genannten Zapfwelle (PTO = power take off), ausgestattet, wobei ein solcher mechanischer Abtrieb gemäß der vorliegenden Erfindung mit der zweiten mechanischen Ausgangsschnittstelle bezeichnet wird.

Nun gibt es grundsätzlich mehrere Möglichkeiten, die zwei beziehungsweise drei elektrischen Maschinen räumlich in dem Antriebssystem anzuordnen. So ist beispielsweise in der zum Anmeldezeitpunkt der vorliegenden Patentanmeldung noch nicht veröffentlichten DE 10 2004 012 767 bevorzugt vorgesehen, drei elektrische Maschinen räumlich derart hintereinander anzuordnen, dass die Rotoren der elektrischen Maschinen zueinander koaxial angeordnet sind. Eine konkrete Ausgestaltung dieser Anordnung ist dort nicht ausgeführt und kann grundsätzlich auf vielerlei Arten erfolgen. So wäre es beispielsweise denkbar, jede elektrische Maschine für sich gesehen an einem Rahmen des Fahrzeugs zu befestigen und mit den erforderlichen elektrischen Anschlüssen sowie mit gegebenenfalls vorgesehenen Kühlvorrichtungselementen zu verbinden. Eine solche Anordnung der elektrischen Maschinen ist jedoch aufwendig in der Konstruktion und auf Grund der hohen Anzahl der einzelnen Komponenten teuer. Auch die Montage an einem Fahrzeug gestaltet sich zeitintensiv und stellt daher einen weiteren Kostenfaktor dar.

Das Dokument EP 1063 152 wird als nächstliegender Stand der Technik angesehen und zeigt die Merkmale der Präambel des unabhängigen Anspruchs 1.

Der vorliegenden Erfindung liegt daher die Aufgabe zugrunde, ein Antriebssystem, eine Statoranordnung einer elektrischen Maschine und ein landwirtschaftliches oder industrielles Nutzfahrzeug der eingangs genannten Art anzugeben und weiterzubilden, durch welches die vorgenannten Probleme überwunden werden. Insbesondere soll eine konstruktiv einfachere Anordnung der elektrischen Maschinen angegeben werden, mit welcher auch eine Kostenreduzierung erzielbar ist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist ein Antriebssystem der eingangs genannten Art **dadurch gekennzeichnet, dass** mindestens zwei der drei elektrischen Maschinen in und/oder an einer gemeinsamen Gehäuseanordnung angeordnet und/oder aufgenommen sind.

Erfindungsgemäß ist zunächst erkannt worden, dass eine Zusammenfassung der elektrischen Maschinen in einer gemeinsamen Gehäuseanordnung bzw. Gehäusestruktur insbesondere bei der Montage des Antriebssystems bei einem Fahrzeug erhebliche Vorteile mit sich bringt. So können nämlich die elektrischen Maschinen im Rahmen einer Vormontage in der Gehäuseanordnung unabhängig von einer Montage des gesamten Fahrzeugs an einem Produktionsband vormontiert werden und somit zu einem Modul zusammengefasst werden, welches die elektrischen Maschinen und gegebenenfalls weitere Komponenten, wie beispielsweise Leistungselektronikkomponenten oder Kühlvorrichtungselemente, aufweisen. Diese Gehäuseanordnung bzw. dieses nahezu vollständig vormontierte Modul kann dann an einem Produktionsband an den restlichen Komponenten des Antriebssystems zeitsparenden montiert werden, so dass in ganz besonders vorteilhafter Weise die unmittelbare Montagezeit am Produktionsband der Fahrzeugkarosserie bezüglich der elektrischen Maschinen klein gehalten werden kann. Mit anderen Worten ermöglicht die Zusammenfassung mindestens zweier elektrischer Maschinen in einer gemeinsamen Gehäuseanordnung eine modulartige Bauweise dieser Antriebskomponenten.

Unter einer Gehäuseanordnung im Sinn der vorliegenden Erfindung ist insbesondere eine tragende Struktur für die elektrischen Maschinen zu verstehen. Lediglich eine zur Verkleidung dienende gemeinsame Gehäuseabdeckung der elektrischen Maschinen allein ist mit einer Gehäuseanordnung im Sinn der vorliegenden Erfindung nicht gemeint. Die erste mechanische Ausgangsschnittstelle dient zum Antreiben mindestens einer Fahrzeugachse. Falls das landwirtschaftliche oder industrielle Nutzfahrzeug in Form eines Traktors ausgebildet ist, dient die erste mechanische Ausgangsschnittstelle ganz besonders bevorzugt zum Antreiben der Hinterachse des Traktors. Optional kann die erste mechanische Ausgangsschnittstelle zusätzlich zum Antrieb der Vorderachse des Traktors dienen, welche zum Beispiel mittels einer Kupplung zugeschaltet werden kann. Obwohl die zweite mechanische Ausgangsschnittstelle zum mechanischen Antreiben eines Arbeitsgeräts dient, welches an das Nutzfahrzeug ankoppelbar ist, könnte die zweite mechanische Ausgangsschnittstelle zusätzlich oder alternativ zum Antrieb eines am Nutzfahrzeug selbst vorgesehenen weiteren mechanischen Verbrauchers dienen, beispielsweise zum Antreiben eines Dreschwerks eines Mähdreschers.

Ganz besonders bevorzugt sind mindestens zwei der elektrischen Maschinen räumlich benachbart zueinander angeordnet. Zum Erzielen einer kompakten Bauweise könnten die elektrischen Maschinen unmittelbar angrenzend nebeneinander derart angeordnet sein, dass die Gehäuse der elektrischen Maschinen weitgehend aneinander angrenzen. Im Allgemeinen werden die elektrischen Maschinen in der Gehäuseanordnung jedoch voneinander beabstandet angeordnet sein, wobei der jeweilige Abstand zwischen zwei elektrischen Maschinen von verschiedenen Faktoren abhängen kann, beispielsweise von dem zur Verfügung stehenden Bauraum in dem Nutzfahrzeug oder von den Erfordernissen bezüglich der Kühlung der elektrischen Maschinen.

In einer bevorzugten Ausführungsform weist eine elektrische Maschine einen Stator auf. Die Statoren mindestens zweier elektrischer Maschinen sind in der gemeinsamen Gehäuseanordnung angeordnet. Es handelt sich somit bei den elektrischen Maschinen gemäß dieser Ausführungsform um solche, deren Stator um einen innen angeordneten Rotor ausgebildet ist, obwohl grundsätzlich auch eine oder mehrere elektrische Maschinen in der Gehäuseanordnung vorgesehen sein könnten, deren Stator im Inneren eines in Form eines Hohlläufers ausgebildeten Rotors angeordnet ist.

Ganz besonders bevorzugt sind die elektrischen Maschinen in der Gehäuseanordnung derart angeordnet, dass die Wellen der elektrischen Maschinen auf einer Seite aus der Gehäuseanordnung austreten. Hierdurch kann insbesondere für landwirtschaftliche oder industrielle Nutzfahrzeuge und ganz besonders bevorzugt für Traktoren eine günstige Konfiguration des Antriebssystems bzw. Antriebsstrangs erzielt werden. So könnte beispielsweise die Gehäuseanordnung räumlich der Antriebsbaugruppe nahezu unmittelbar nachgeordnet sein und es könnte an der der Antriebsbaugruppe abgewandten Seite der Gehäuseanordnung eine Getriebestufe nachgeordnet sein mit welcher die Wellen der elektrischen Maschinen koppelbar sind. Eine Antriebswelle der Antriebsbaugruppe könnte in die Gehäuseanordnung eintreten und mindestens eine elektrische Maschine antreiben. Mindestens einer oder mehrerer Wellen bzw. Abtriebswelle der elektrischen Maschinen könnte aus der der Antriebsbaugruppe abgewandelten Seite der Gehäuseanordnung aus der Gehäuseanordnung austreten und in die Getriebestufe eintreten, in welcher beispielsweise zwei Getriebestufen zur Drehzahlbereichswandlung vorgesehen sein könnten. Auch könnte in der Getriebestufe eine Schnittstelle zu einer weiteren Antriebsachse vorgesehen sein, so dass mit der Getriebestufe mechanisches Drehmoment auf die Hinterachse eines Traktors und auf eine Vorderachse des Traktors in einem vorgebbaren Verhältnis übertragbar ist.

Bevorzugt weist die Gehäuseanordnung mindestens ein Abschlussteil auf, an welchem mindestens zwei elektrische Maschinen befestigbar sind. Das Abschlussteil könnte beispielsweise in Form eines Lagerschilds ausgebildet sein. In einer ganz besonders bevorzugten Ausführungsform weist die Gehäuseanordnung zwei Abschlussteile bzw. Lagerschilde auf, wobei das eine Abschlussteil an einer Seite der Gehäuseanordnung angeordnet ist und wobei das andere Abschlussteil an der hierzu gegenüberliegenden Seite der Gehäuseanordnung angeordnet ist. An diesen beiden Abschlussteilen bzw. Lagerschilden könnten die Statoren der elektrischen Maschinen befestigt sein. Die elektrischen Maschinen könnten sich also im Wesentlichen zwischen den zwei Lagerschilden erstrecken.

Die Gehäuseanordnung könnte einen mittleren Teil aufweisen, welcher eine mindestens zwei elektrische Maschinen aufnehmende Metallkonstruktion aufweist. Dieser mittlere Teil der Gehäuseanordnung könnte zwischen den zwei Abschlussteilen der Gehäuseanordnung angeordnet sein. Zumindest ein Abschlussteil könnte am dem mittleren Teil angeordnet sein. Der mittlere Teil ist bevorzugt in Form eines Metallstapelblocks ausgestaltet. Der Metallstapelblock selbst könnte aus einzelnen gegeneinander isolierten Bleche gebildet sein, deren Querschnitt derart ausgebildet ist, dass die Statoren der elektrischen Maschine darin aufnehmbar oder integrierbar sind. Somit sind nur wenig Gehäusekomponenten erforderlich, um die Gehäuseanordnung zur Aufnahme der elektrischen Maschinen zu realisieren. In ganz besonders vorteilhafter Weise kann daher eine kostengünstige Produktion des erfindungsgemäßen Antriebssystems unter wirtschaftlichen Gesichtspunkten dargestellt werden.

Ganz besonders bevorzugt sind die mindestens zwei elektrischen Maschinen von einer gemeinsamen Kühleinrichtung kühlbar. Als Kühlung ist eine Gas- oder Flüssigkeitskühlung der elektrischen Maschinen denkbar. So könnten in dem mittleren Teil der Gehäuseanordnung Kühlleitungen vorgesehen bzw. verlegt sein, welche mit einem Kühlmittel durchströmt werden, das zumindest ein Teil der von den elektrischen Maschinen erzeugten Wärme aufnimmt und aus dem mittleren Teil der Gehäuseanordnung bzw. aus der Gehäuseanordnung zu einem entsprechenden Kühlmittel-Tauscher leitet.

Wie bereits angedeutet, sind in der zum Anmeldezeitpunkt der vorliegenden Patentanmeldung noch nicht veröffentlichten DE 10 2004 012 767 drei elektrische Maschinen räumlich derart hintereinander angeordnet, dass die Rotoren der elektrischen Maschinen zueinander koaxial angeordnet sind. Eine solche Anordnung (Hintereinanderanordnung) der elektrischen Maschinen ist grundsätzlich dann vorteilhaft, wenn in Längsrichtung der Rotoren der elektrischen Maschine - üblicherweise in Richtung der Fahrzeuglängsachse orientiert - genügend Bauraum bei dem Fahrzeug zur Verfügung steht. Dies ist bei landwirtschaftlichen und industriellen Nutzfahrzeugen und insbesondere bei Traktoren nicht immer der Fall. Daher sind in einer ganz besonders bevorzugten Ausführungsform mindestens zwei der elektrischen Maschinen räumlich derart angeordnet sind, dass deren Wellen im Wesentlichen parallel zueinander orientiert und zueinander versetzt angeordnet sind. Durch eine solche Anordnung der elektrischen Maschinen ist der erforderliche Bauraum in einer Richtung quer zur Fahrzeuglängsachse größer als es bei der Hintereinanderanordnung der elektrischen Maschinen der Fall ist. Dafür ist jedoch der Bauraum in Längsrichtung der Rotoren der elektrischen Maschinen bzw. in Fahrzeuglängsrichtung kleiner als bei einer Hintereinanderanordnung der elektrischen Maschinen, was insbesondere bei Traktoren von Vorteil ist.

Bei einer räumlichen Anordnung der elektrischen Maschinen mit im Wesentlichen parallel zueinander orientierten Wellen sind ganz besonders bevorzugt mindestens zwei elektrische Maschinen derart in der Gehäuseanordnung angeordnet, dass sie von einer Seite der Gehäuseanordnung abragen. Dies könnte beispielsweise derart realisiert werden, dass die mindestens zwei elektrischen Maschinen an einem Abschlussteil der Gehäuseanordnung, beispielsweise an einem Lagerschild, befestigt sind.

Insbesondere bei Traktoren ist es von Vorteil, wenn die Wellen der zweiten und dritten elektrischen Maschine synchron miteinander koppelbar sind, vorzugsweise über ein Zahnrad bzw. Stirnrad. Bevorzugt sind die zwei elektrischen Maschinen ständig miteinander synchron gekoppelt. Es ist demgemäß keine Getriebeschaltstelle vorgesehen, mit welcher man die synchrone Kopplung der zwei elektrischen Maschinen unterbrechen kann. Falls lediglich ein zeitweise synchroner Betrieb der zwei elektrischen Maschinen vorgesehen ist, könnte eine Getriebeschaltstelle vorgesehen sein, mit welcher die synchrone Kopplung der zwei elektrischen Maschinen unterbrochen werden kann.

Da die Wellen der zweiten und dritten elektrischen Maschine mit der zur Fortbewegung des Nutzfahrzeugs dienenden ersten mechanischen Ausgangsschnittstelle reversibel verbindbar ist, kann das Nutzfahrzeug durch eine synchrone Kopplung dieser beiden elektrischen Maschine mittels einer entsprechenden Ansteuerung für verschiedene Betriebsmodi bzw. Fahrgeschwindigkeiten flexibel betrieben werden. So ist es beispielsweise denkbar, dass in einem Betriebsmodus lediglich die zweite elektrische Maschine mechanisches Drehmoment auf die erste Ausgangsschnittstelle überträgt und der Rotor der dritten - dann deaktivierten - elektrischen Maschine auf Grund der synchronen Kopplung nahezu verlustfrei mitdreht. Falls nun ein anderer Betriebsmodus eingestellt werden soll, kann die zweite elektrische Maschine kurz vor einer Umschaltung in einen lastlosen Zustand gebracht werden, indem die dritte elektrische Maschine entsprechend belastet wird bzw. ihrerseits ein mechanisches Drehmoment erzeugt. Somit würde in ganz besonders vorteilhafter Weise die dritte elektrische Maschine für die Dauer der Umschaltung für eine drehmomentunterbrechungsfreie Traktion sorgen. Dies ist insbesondere bei Traktoren relevant, da bei einem Umschalten in einen anderen Geschwindigkeitsbereich auch während des Umschaltvorgangs ein Drehmoment von der Antriebsbaugruppe auf den Fahrantrieb zu übertragen ist (Lastschaltgetriebe), da ansonsten der Traktor unmittelbar stehen bleiben würde, wenn ein lastfreier Schaltvorgang (beispielsweise beim Pflügen) durchgeführt werden würde.

In einer ganz besonders bevorzugten Ausführungsform ist eine vierte elektrische Maschine vorgesehen. Die vierte elektrische Maschine ist mit der ersten oder der zweiten mechanischen Ausgangsschnittstelle - insbesondere auch reversibel - koppelbar. Die vierte elektrische Maschine ist bevorzugt räumlich benachbart zu einer der ersten bis dritten elektrischen Maschine angeordnet. So könnte beispielsweise die vierte elektrische Maschine ebenfalls in der Gehäuseanordnung angeordnet sein, so dass eine kompakte Anordnung und/oder eine gemeinsame Kühlung der vier elektrischen Maschinen möglich ist.

Zum Summieren des von der Antriebsbaugruppe erzeugten Drehmoments und des von einer elektrischen Maschine erzeugten Drehmoments könnte bevorzugt ein Summierungsgetriebe mit drei mechanischen Schnittstellen vorgesehen sein. Die erste Schnittstelle des Summierungsgetriebes könnte mit einer von der Antriebsbaugruppe angetriebenen Welle gekoppelt sein. Die zweite Schnittstelle des Summierungsgetriebes könnte mit der Welle einer elektrischen Maschine kuppelbar sein. Die dritte Schnittstelle des Summierungsgetriebes könnte mit der ersten mechanischen Ausgangsschnittstelle und/oder mit der zweiten mechanischen Ausgangsschnittstelle des Antriebssystems reversibel kuppelbar sein.

Im Konkreten könnte das Summierungsgetriebe ein Planetengetriebe aufweisen. Gemäß einer bevorzugten Ausführungsform steht die von der Antriebsbaugruppe angetriebene Welle mit dem Hohlrad des Planetengetriebes drehfest in Verbindung. Der Planetenträger des Planetengetriebes ist reversibel mit der ersten Ausgangsschnittstelle kuppelbar. Das Sonnenrad des Planetengetriebes ist reversibel mit der zweiten, dritten oder vierten elektrischen Maschine kuppelbar. Ein solches Summierungsgetriebe ermöglicht in ganz besonders vorteilhafter Weise sehr flexible Einsatzmöglichkeiten des Antriebssystems, insbesondere bei einem unabhängig von der ersten Ausgangsschnittstelle betreibbaren zweiten Ausgangsschnittstelle (Zapfwelle), worauf in der Figurenbeschreibung im Konkreten eingegangen wird. In diesem Zusammenhang könnte vorgesehen sein, dass die Welle der vierten elektrischen Maschine mit dem Sonnenrad des Planetengetriebes in Drehverbindung steht. So wie der Rotor der ersten elektrischen Maschine ständig mit einer von der Antriebsbaugruppe angetriebenen Welle in Drehverbindung stehen kann, könnte auch der Rotor der vierten elektrischen Maschine ständig mit dem Sonnenrad des Planetengetriebes in Drehverbindung stehen. Es könnte jedoch eine Getriebeschaltstelle vorgesehen sein, mit welcher die erste und/oder die vierte elektrische Maschine von der von der Antriebsbaugruppe angetriebenen Welle bzw. von dem Sonnenrad des Planetengetriebes abkuppelbar ist.

Die zweite Ausgangsschnittstelle kann in einer bevorzugten Weiterbildung dadurch angetrieben werden, dass der Planetenträger des Planetengetriebes mit der zweiten Ausgangsschnittstelle gekuppelt wird. Alternativ oder zusätzlich kann die zweite Ausgangsschnittstelle dadurch angetrieben werden, dass eine von der Antriebsbaugruppe angetriebene Welle reversibel mit der zweiten Ausgangsschnittstelle gekuppelt wird. Hierzu könnte jeweils eine reibschlüssige Kupplung bzw. eine Lamellenkupplung oder einer Klauenkupplung vorgesehen sein, wobei die Lamellenkupplung elektromagnetisch oder hydraulisch betätigbar ausgeführt sein könnte. Somit besteht grundsätzlich die Möglichkeit, die zweite Ausgangsschnittstelle lediglich mit einem Teil oder mit dem gesamten von der Antriebsbaugruppe erzeugten mechanischen Drehmoment anzutreiben, falls eine entsprechende Kupplung eingerückt ist. Weiterhin kann die zweite Ausgangsschnittstelle lediglich von dem am Planetenträger des Planetengetriebes anliegenden Drehmoments betrieben werden, falls eine entsprechende weitere Kupplung eingerückt ist. Es ist auch denkbar, dass die zweite Ausgangsschnittstelle sowohl von einem Teil des von der Antriebsbaugruppe erzeugten mechanischen Drehmoments und des am Planetenträger des Planetengetriebes anliegenden Drehmoments betrieben wird. In diesem Fall sind beide Kupplungen eingerückt und es werden die mechanischen Drehmomente entsprechend summiert. Dies setzt allerdings voraus, dass die Komponenten des Antriebssystems derart betrieben werden, dass es nicht zu einem Blockieren des Antriebssystems kommt.

In den meisten Betriebszuständen des Antriebssystems ist es vorgesehen, dass zumindest eine der elektrischen Maschinen als Generator betrieben wird und dass mit der von einer elektrischen Maschine erzeugten elektrischen Energie mindestens eine der beiden anderen elektrischen Maschinen angetrieben wird.

Lediglich der Vollständigkeit halber sei erwähnt, dass eine als Motor oder als Generator betriebene elektrische Maschine bevorzugt eine Synchronmaschine oder - weniger bevorzugt - eine Asynchronmaschine aufweist beziehungsweise nach dem Prinzip einer Synchronmaschine bzw. einer Asynchronmaschine arbeiten könnte. So könnte für jede elektrische Maschine ein Wechselrichter bzw. Umrichter vorgesehen sein. Da elektrischer Strom mit Hilfe einer als Generator betriebenen elektrischen Maschine erzeugt wird, welche von der Antriebsbaugruppe angetrieben wird und die Antriebsbaugruppe in Abhängigkeit der jeweiligen Fahrsituation des Nutzfahrzeugs eine variable Drehzahl aufweist, weist der von der als Generator betriebenen elektrischen Maschine erzeugte elektrische Wechselstrom eine variable Frequenz auf. Zur Umwandlung des elektrischen Wechselstroms variabler Frequenz in elektrischen Wechselstrom einer vorgegebenen, im Wesentlichen konstanten Frequenz könnte ein solcher Wechselrichter dienen. Mit dem Wechselrichter könnte der von der als Generators betriebenen elektrischen Maschine erzeugte elektrische Wechselstrom veränderbarer Frequenz zunächst in Gleichstrom und dann in Wechselstrom der vorgebbaren Frequenz umgewandelt werden. Mit diesem Wechselstrom können dann beispielsweise eine elektrische Maschine oder andere elektrische Komponenten angetrieben werden. Bevorzugt ist ein Gleichstromkreis mit mindestens einem elektrischen Speicher vorgesehen. Dieser Gleichstromkreis wird von dem Wechselrichter gespeist und könnte sozusagen als Zwischenstromkreis dienen, an welchen auch unmittelbar mit Gleichstrom betreibbare elektrische Verbraucher angeschlossen werden können. Der elektrische Speicher könnte beispielsweise in Form einer Batterie oder entsprechend dimensionierter Kondensatoren ausgeführt sein. Ebenfalls ganz besonders bevorzugt ist mindestens ein weiterer Wechselrichter vorgesehen, mit welchem der Gleichstrom in einen Wechselstrom einer vorgebbaren Frequenz oder in Wechselstrom eines vorgebbaren Verlaufs variabler Frequenzen umwandelbar ist. Hiermit kann beispielsweise mindestens eine elektrische Maschine oder elektrischer Verbraucher betrieben werden, welcher mit Wechselstrom angetrieben wird.

In einer ganz besonders bevorzugten Ausführungsform sind die drei oder vier elektrischen Maschinen im Wesentlichen baugleich ausgebildet und/oder weisen eine im Wesentlichen vergleichbare Leistungscharakteristik auf. Damit kann für landwirtschaftliche Nutzfahrzeuge und insbesondere für Traktoren eine günstige Konfiguration des erfindungsgemäßen Antriebssystems erreicht werden, wobei beispielsweise eine relativ einfach strukturierte Ansteuerung der dritten oder vierten elektrischen Maschine ein Umschalten zwischen unterschiedlichen Betriebsmodi schaltruckfrei möglich ist, da die Leistungscharakteristiken der zweiten und dritten elektrischen Maschine im Wesentlichen identisch sind und Treiberstufen bzw. Leistungselektronikbaugruppen im Wesentlichen identisch ausgebildet sein können.

Insbesondere wenn das erfindungsgemäße Antriebssystem für Traktoren eingesetzt wird, ist ein erster Betriebszustand vorgesehen, in welchem die erste elektrische Maschine als Generator betrieben wird und die zweite und die dritte elektrische Maschine als Motor betrieben werden und mit der ersten mechanischen Ausgangsschnittstelle verbunden sind. Das von der zweiten und dritten elektrischen Maschine erzeugte Drehmoment wird auf die erste mechanische Ausgangsschnittstelle übertragen. In diesem Betriebszustand erfolgt der Fahrantrieb des Traktors ausschließlich von den zwei elektrischen Maschinen. In diesem Betriebsmodus kann ein entsprechend ausgestatteter Traktor beispielsweise eine Geschwindigkeit von bis zu 25 km/h für die Vorwärts- oder Rückwärtsfahrt haben. Hierbei ist es auch möglich, einen Zapfwellenbetrieb über die zweite mechanische Ausgangsschnittstelle - insbesondere auch stufenlos - zu realisieren, worauf im Folgenden eingegangen wird.

Weiterhin ist ein zweiter Betriebszustand vorgesehen, in welchem mit einem Teil des von der Antriebsbaugruppe erzeugten mechanischen Drehmoments die als Generator betriebene vierte elektrische Maschine antreibbar ist. Die zweite und dritte elektrische Maschine werden als Motor betrieben. Das von der zweiten und dritten elektrischen Maschinen erzeugte mechanische Drehmoment ist mit einem weiteren Teil des von der Antriebsbaugruppe erzeugten mechanischen Drehmoments auf die erste mechanische Ausgangsschnittstelle übertragbar. Dieser Betriebsmodus stellt eine leistungsverzweigte Getriebestruktur in einer "speed-split"-Konfiguration dar. Die von der Antriebsbaugruppe abgegebene Leistung verzweigt im Summierungsgetriebe und wird auf der ersten mechanischen Ausgangsschnittstelle wieder summiert. Somit wird ein Teil der Leistung mechanisch und ein anderer Teil der Leistung elektrisch übertragen. Dieser Betriebsmodus ist insbesondere für eine langsame Vorwärtsfahrt von bis zu 25 km/h und schwere Zugarbeiten eines Traktors geeignet.

Es ist ein dritter Betriebszustand vorgesehen, in welchem die erste elektrische Maschine als Generator betrieben wird. Die vierte elektrische Maschine wird als Motor betrieben. Das von der vierten elektrischen Maschine erzeugte mechanische Drehmoment ist mit dem von der Antriebsbaugruppe erzeugte mechanische Drehmoment summierbar auf die erste mechanische Ausgangsschnittstelle übertragbar. Hiermit ist eine leistungsverzweigte Getriebestruktur in einer "torque split"-Konfiguration realisiert. Dieser Betriebsmodus wird bevorzugt für Fahrten des Traktors mit einer höheren Fahrgeschwindigkeit benutzt, beispielsweise 25 bis 50 km/h.

In einer besonders bevorzugten Ausführungsform wird die vierte elektrische Maschine als Motor betrieben. Das von der vierten elektrischen Maschine erzeugte Drehmoment und - falls eine entsprechende Kupplung eingerückt ist - zumindest ein Teil des von der Antriebsbaugruppe erzeugten mechanischen Drehmoments ist auf die zweite mechanische Ausgangsschnittstelle übertragbar. Somit kann die zweite mechanische Ausgangsschnittstelle bzw. die Zapfwelle (PTO) des Traktors einerseits lediglich durch die vierte elektrische Maschine angetrieben werden, und zwar im Wesentlichen unabhängig von der momentan vorliegenden Drehzahl der Antriebsbaugruppe. Andererseits kann die zweite mechanische Ausgangsschnittstelle gleichzeitig von der vierten elektrischen Maschine und zumindest von einem Teil des von der Antriebsbaugruppe erzeugten mechanischen Drehmoments angetrieben werden.

Hinsichtlich einer Statoranordnung wird die eingangs genannte Aufgabe durch die Merkmale des Patentanspruchs 24 gelöst. Demgemäß weist eine Statoranordnung einer elektrischen Maschine eine Aussparung zur Aufnahme eines Rotors der elektrischen Maschine auf. Erfindungsgemäß ist mindestens eine weitere Aussparung zur Aufnahme mindestens eines weiteren Rotors vorgesehen.

Bei vielen Anwendungen werden mehr als eine als Motor betriebene elektrische Maschine eingesetzt. Nun besteht grundsätzlich die Möglichkeit mehrere dieser elektrischen Maschinen - wie bereits in erfindungsgemäßer Weise gemäß Patentanspruch 1 vorgeschlagen - in oder an einer gemeinsamen Gehäuseanordnung anzuordnen oder anzubauen. Somit sind diese elektrischen Maschinen räumlich nah beieinander angeordnet, wodurch eine kompakte Bauweise bei kleinem zur Verfügung stehenden Bauraum möglich ist. In erfindungsgemäßer Weise ist darüber hinaus erkannt worden, dass bei solchen Anwendungen nicht nur in vorteilhafter Weise eine kompakte Bauweise möglich ist, sondern dass darüber hinaus auch noch in ganz besonders vorteilhafter Weise eine aus wenigeren einzelnen Bauteilen bestehende Konstruktion gebildet werden kann, welche die Funktion von mindestens zwei als Motor betriebene elektrischen Maschinen zur Verfügung stellen kann, die auch unabhängig voneinander betrieben werden können. Mit anderen Worten sind die zwei elektrischen Maschinen in einer gemeinsamen Baugruppe vereinigt, was eine kostengünstigere Herstellung ermöglicht. Gegebenenfalls ist die Statoranordnung hinsichtlich der durch den darin auftretenden maximalen magnetischen Fluss derart auszubilden, dass das Material der Statoranordnung nicht überlastet wird. Alternativ hierzu könnten die elektrischen Maschinen derart angesteuert oder betrieben werden, dass ein vorgebbarer maximaler magnetischer Fluss in der Statoranordnung nicht überschritten wird. In oder an den Aussparungen der Statoranordnung könnten Wicklungen vorgesehen sein, die die Funktionen der aus dem Stand der Technik bei herkömmlichen elektrischen Maschinen bekannten Statorwicklungen aufweisen.

Ganz besonders bevorzugt sind die Aussparungen der erfindungsgemäßen Statoranordnung derart angeordnet, dass hierdurch eine Gehäuseanordnung bzw. eine Statoranordnung für eine Gehäuseanordnung gemäß einem der Ansprüche 1 bis 23 realisierbar ist, im Konkreten nach einem der Ansprüche 1 bis 10. Insoweit wird zur Vermeidung von Wiederholungen auf den vorangegangenen Teil der Beschreibung verwiesen.

Hinsichtlich eines landwirtschaftlichen oder industriellen Nutzfahrzeugs und insbesondere hinsichtlich eines Traktors wird die eingangs genannte Aufgabe durch die Merkmale des Patentanspruchs 25 gelöst. Demgemäß ist ein landwirtschaftliches oder industrielles Nutzfahrzeug, insbesondere ein Traktor, gekennzeichnet durch ein Antriebssystem nach einem der Patentansprüche 1 bis 23. zur Vermeidung von Wiederholungen wird auf den vorangegangene Teil der Beschreibung verwiesen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: ein Stickdiagramm eines ersten Ausführungsbeispiels eines erfindungsgemäßen Antriebssystems,
- Fig. 2: ein Stickdiagramm eines zweiten Ausführungsbeispiels eines erfindungsgemäßen Antriebssystems,
- Fig. 3: ein Stickdiagramm eines dritten Ausführungsbeispiels eines erfindungsgemäßen Antriebssystems,
- Fig. 4: eine perspektivische Ansicht einer erfindungsgemäßen Anordnung elektrischer Maschinen,
- Fig. 5: eine perspektivische Ansicht eines Gehäuseteils aus Fig. 4 und

- Fig. 6: eine Schnittansicht bzw. eine Draufsicht eines Blechschnitts des Gehäuseteils aus Fig. 5.

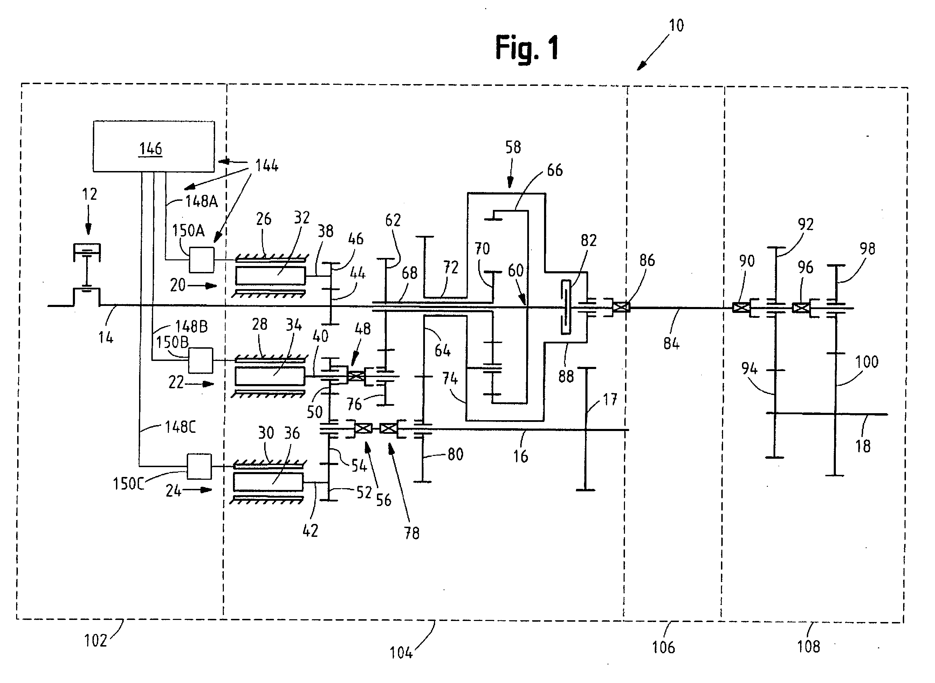

In den Fig. sind gleiche oder ähnliche Baugruppen mit denselben Bezugszeichen gekennzeichnet. Fig. 1 zeigt den Antriebssystem 10 eines in den Fig. nicht vollständig gezeigten landwirtschaftliche Nutzfahrzeugs bzw. Traktors. Der Traktor umfasst eine Antriebsbaugruppe 12, welche einen Verbrennungsmotor aufweist und welche im Folgenden der Einfachheit halber mit Verbrennungsmotor 12 bezeichnet wird. Der Verbrennungsmotor 12 ist mit einer Antriebswelle 14 gekoppelt ist, mit welcher weitere Komponenten des Antriebssystems 10 antreibbar sind.

Mit dem Antriebssystem 10 wird eine erste mechanische Ausgangsschnittstelle 16 angetrieben, wobei die erste Ausgangsschnittstelle 16 zum Antreiben der (in Fig. 1 nicht gezeigten) Hinterachse des Traktors und zusätzlich zum Antreiben der (in Fig. 1 nicht gezeigten) Vorderachse bzw. der Räder der Vorderachse des Traktors dient. Eine diesbezügliche Kopplungsmöglichkeit zu einer Vorderachse ist mit dem mit Bezugszeichen 17 gekennzeichneten Zahnrad angedeutet. Weiterhin ist eine zweite mechanische Ausgangsschnittstelle 18 (hier auch als Zapfwelle bezeichenbar) vorgesehen, die zum Antreiben eines an den Traktor ankoppelbaren (in Fig. 1 nicht gezeigten) Arbeitsgeräts dient.

Es ist eine erste, eine zweite und eine dritte elektrische Maschine 20, 22, 24 vorgesehen. Die elektrischen Maschinen 20, 22, 24 sind im Wesentlichen baugleich ausgebildet und weisen daher eine vergleichbare Leistungscharakteristik auf. Die elektrischen Maschinen 20, 22 und 24 weisen jeweils einen Stator 26, 28 und 30 sowie jeweils einen Rotor 32, 34 und 36 auf. Der Rotor 32 ist drehfest mit der Welle 38, der Rotor 34 ist drehfest mit der Welle 40 und der Rotor 36 ist drehfest mit der Welle 42 verbunden. Der Rotor 32 der ersten elektrischen Maschine 20 steht mittels der Welle 38 und einem aus den zwei Zahnrädern 44, 46 bestehenden Zwischengetriebe mit der Antriebswelle 14 ständig in Drehverbindung.

Der Rotor 34 der zweiten elektrischen Maschine 22 samt der Welle 40 ist mittels der Schaltstelle 48 mit dem Zahnrad 50 drehfest verbindbar. Das Zahnrad 52 ist drehfest mit der Welle 42 verbunden. Sowohl das Zahnrad 50 als auch das Zahnrad 52 kämmt jeweils mit dem Zahnrad 54. Mit der Schaltstelle 56 ist das Zahnrad 54 drehfest mit der ersten mechanischen Ausgangsschnittstelle 16 bzw. dem Fahrantrieb des Traktors verbindbar. Somit sind die Wellen 40, 42 der Rotoren 34, 36 der zweiten elektrischen Maschine 22 und der dritten elektrischen Maschine 24 synchron miteinander koppelbar, sofern die Schaltstelle 48 aus Fig. 1 sich in dem linken eingerückten Zustand befindet.

Es ist ein Summierungsgetriebe 58 vorgesehen, mit welchem das von dem Verbrennungsmotor 12 erzeugte Drehmoment und das von einer elektrischen Maschine erzeugte Drehmoment, beispielsweise von der zweiten elektrischen Maschine 22, summiert werden kann. Das Summierungsgetriebe 58 ist im Wesentlichen in Form eines Planetengetriebes ausgebildet und umfasst drei mechanische Schnittstellen 60, 62, 64. Die erste Schnittstelle 60 des Summierungsgetriebes 58 ist mit der Antriebswelle 14 und dem Hohlrad 66 des Summierungsgetriebes 58 drehfest verbunden. Die zweite mechanische Schnittstelle 62 ist durch das mit dem Bezugszeichen 62 gekennzeichnete Zahnrad dargestellt, welches drehfest mit der Hohlwelle 68 und dem Sonnenrad 70 des Summierungsgetriebes 58 verbunden ist. Die dritte mechanische Schnittstelle 64 ist durch das mit demselben Bezugszeichen gekennzeichnete Zahnrad 64 gebildet, welches über die Hohlwelle 72 drehfest mit dem Planetenträger 74 des Summierungsgetriebes 58 in Verbindung steht.

Wenn die Schaltstelle 48 sich in ihrem rechten eingerückten Zustand befindet, ist die Welle 40 der zweiten elektrischen Maschine 22 drehfest mit dem Zahnrad 76 verbunden. Das Zahnrad 76 kämmt mit dem Zahnrad 62, welches die zweite Schnittstelle des Summierungsgetriebes 58 darstellt. Somit ist zwischen der zweiten elektrischen Maschine 22 und der zweiten Schnittstelle 62 des Summierungsgetriebes 58 ein Drehmomentfluss herstellbar. Mit der Schaltstelle 78 ist eine drehfeste Verbindung zwischen der ersten Ausgangsschnittstelle 16 und dem Zahnrad 80 herstellbar. Das Zahnrad 80 kämmt mit dem Zahnrad 64 bzw. mit der dritten Schnittstelle 64 des Summierungsgetriebes 58.

Mit der in Form einer Lamellenkupplung ausgebildeten Kupplung 82 ist eine drehfeste Verbindung zwischen der Antriebswelle 14 und der Welle 84 herstellbar. Mit der Schaltstelle 86 ist eine drehfeste Verbindung zwischen der Welle 84 und dem Rotationsteil 88 herstellbar, wobei das Rotationsteil 88 drehfest mit dem Planetenträger 74 verbunden ist.

Mit der Schaltstelle 90 kann eine drehfeste Verbindung zwischen der Welle 84 und dem Zahnrad 92 hergestellt werden. Das Zahnrad 92 kämmt mit dem Zahnrad 94, welches drehfest mit der zweiten mechanischen Ausgangsschnittstelle 18 verbunden ist. Mit der Schaltstelle 96 ist eine drehfeste Verbindung zwischen der Welle 84 und dem Zahnrad 98 herstellbar. Das Zahnrad 98 kämmt mit dem Zahnrad 100, welches drehfest mit der zweiten mechanischen Ausgangsschnittstelle 18 verbunden ist. Somit kann mit der Schaltstelle 90 ein Drehmomentfluss von der Welle 84 über die Zahnradkette 92, 94 auf die zweite mechanische Ausgangsschnittstelle 18 einerseits und mit der Schaltstelle 96 ein Drehmomentfluss von der Welle 84 über die Zahnradkette 98, 100 auf die zweite mechanische Ausgangsschnittstelle 18 andererseits in jeweils unterschiedlichen Übersetzungsverhältnissen hergestellt werden.

Mit den gestrichelt eingezeichneten Bereichen 102 bis 108 sind die folgenden Baugruppen des in Fig. 1 gezeigten Traktors angedeutet: 102 kennzeichnet die Baugruppe um den Verbrennungsmotor 12, 104 kennzeichnet das Getriebegehäuse, 106 kennzeichnet das Hinterachsdifferentialgetriebegehäuse und 108 kennzeichnet das Zapfwellengehäuse. Lediglich schematisch ist angedeutet, dass die erste mechanische Schnittstelle 16 in das Hinterachsdifferentialgetriebegehäuse 106 eintritt.

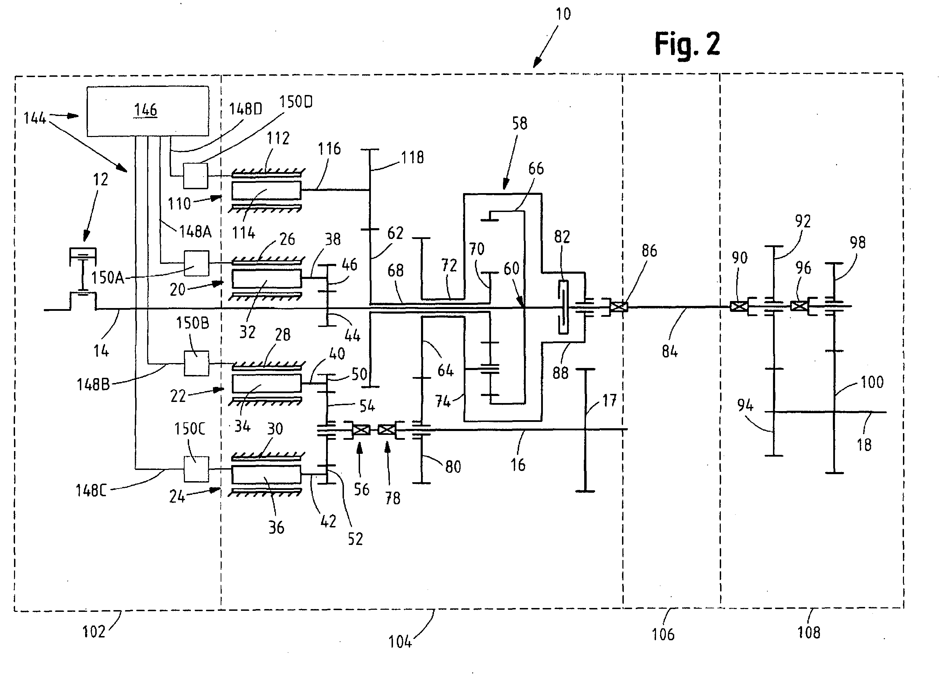

Fig. 2 zeigt ein weiteres Ausführungsbeispiel der vorliegenden Erfindung, in welchem eine vierte elektrische Maschine 110 vorgesehen ist. Die vierte elektrische Maschine 110 weist einen Stator 112 und einen Rotor 114 auf. Der Rotor 114 ist drehfest mit der Welle 116 und dem Zahnrad 118 verbunden. Das Zahnrad 118 kämmt mit dem Zahnrad 62 bzw. der zweiten Schnittstelle 62 des Summierungsgetriebes 58. Die elektrischen Maschinen 20, 22, 24, 110 sind im Wesentlichen baugleich ausgebildet und weisen eine im Wesentlichen vergleichbare Leistungscharakteristik auf.

Das in Fig. 2 gezeigte Ausführungsbeispiel eines Antriebssystems 10 ist im Wesentlichen zu dem in Fig. 1 gezeigten Ausführungsbeispiel des Antriebssystems 10 vergleichbar ausgebildet. Ein Unterschied hierbei ist, dass die elektrische Maschine 110 über die Welle 116 und das Zahnrad 118 stets mit der zweiten Schnittstelle 62 des Summierungsgetriebes 58 steht. Die elektrische Maschine 22 ist in diesem Ausführungsbeispiel nicht unmittelbar mit der zweiten Schnittstelle 62 des Summierungsgetriebes 58 verbindbar, da eine der Schaltstelle 48 aus Fig. 1 entsprechende Schaltstelle in dem Ausführungsbeispiel gemäß Fig. 2 nicht vorgesehen ist. Der Rotor 34 der elektrischen Maschine 22 steht mit dem Rotor 36 der elektrischen Maschine 24 über die jeweiligen Wellen 40, 42 und die Zahnräder 50, 52, 54 stets in synchroner Drehverbindung.

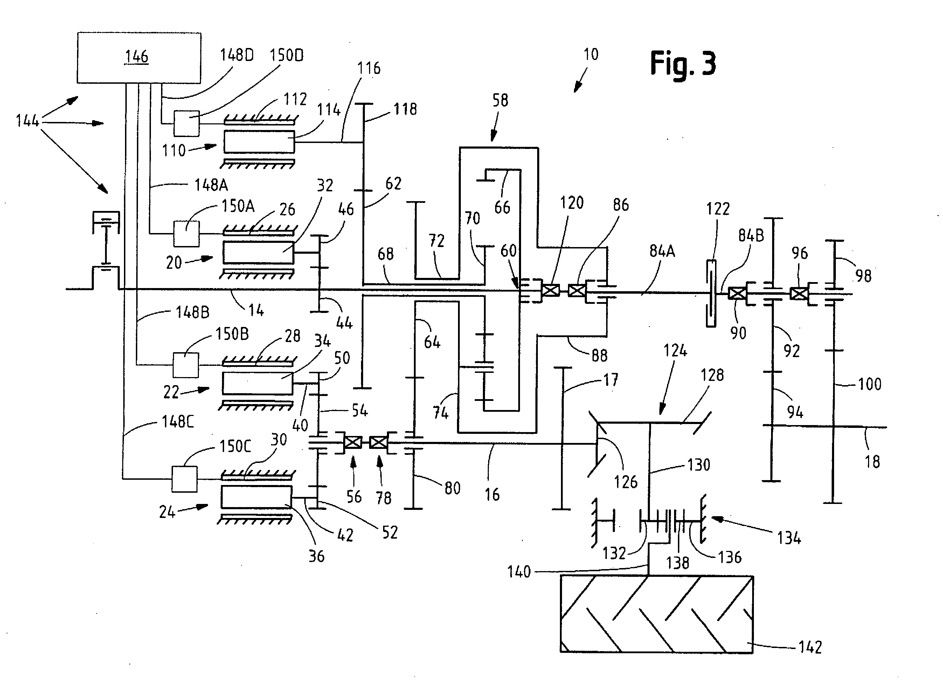

Fig. 3 zeigt ein weiteres Ausführungsbeispiel eines erfindungsgemäßen Antriebssystems 10, welches im Wesentlichen vergleichbar zu dem Ausführungsbeispiel aus Fig. 2 ist. Lediglich die Lamellenkupplung 82 aus Fig. 2 ist in Form einer synchron schaltbaren Klauenkupplung ausgebildeten Schaltstelle 120 in Fig. 3 zwischen der Antriebswelle 14 und der Welle 84A ausgebildet. Die in Fig. 2 gezeigte formschlüssige Schaltstelle 86 ist in das Innere des Rotationsteils 88 verlegt und der Einfachheit halber ebenfalls mit dem Bezugszeichen 86 gekennzeichnet. Zwischen der Welle 84A und der Welle 84B ist eine reibschlüssige Lamellenkupplung 122 angeordnet, mit welcher beim Einrückvorgang eine Drehsynchronisation des Zapfwellengetriebeteils samt adaptiertem Anbaugerät möglich ist und über welche im eingerückten Zustand ein Drehmoment von der Welle 84A auf die zweite mechanische Ausgangsschnittstelle 18 übertragbar ist.

Etwas detaillierter ist in Fig. 3 das Hinterachsdifferentialgetriebe 124 gezeigt. So ist das Kegelzahnrad 126 drehfest mit der ersten mechanischen Ausgangsschnittstelle 16 verbunden. Das Kegelzahnrad 126 kämmt mit dem Zahnrad 128, welches drehfest mit der Welle 130 verbunden ist. Die Welle 130 ist drehfest mit dem Sonnenrad 132 des Planeten-Zwischengetriebes 134 verbunden, bei welchem das Hohlrad 136 drehfest in dem in Fig. 3 nicht gezeigten Achsgehäuse angeordnet ist. Der Planetenträger 138 des Planeten-Zwischengetriebes 134 ist drehfest mit der Antriebswelle 140 verbunden, welche letztendlich das Rad 142 des Traktors antreibt.

Bezüglich der Ansteuerung der elektrischen Maschinen 20, 22, 24 und gegebenenfalls 110 ist die elektronische Ansteuervorrichtung 144 vorgesehen. Die Ansteuervorrichtung 144 umfasst eine elektronische Steuereinheit 146, welche - zumindest wie in den Fig. 1 bis 3 gezeigt - auch Baugruppen einer Leistungselektronik wie auch einer Wandlerelektronik zum Wandeln von Wechselstrom in Gleichstrom und umgekehrt aufweisen kann. Die elektrische Maschinen 20, 22, 24, 110 sind mit Versorgungsleitungen 148A bis 148D entsprechend mit der elektronischen Steuereinheit 146 verbunden, wobei jeweils eine Wandler- bzw. Umrichtereinheit 150A bis 150D vorgesehen ist. In Abhängigkeit der Ansteuerung einer elektrischen Maschine 20, 22, 24, 110 durch die elektronische Steuereinheit 146 ist es möglich, eine der elektrischen Maschinen 20, 22, 24, 110 als Generator oder als Motor zu betreiben. Falls eine elektrische Maschine 20, 22, 24, 110 als Generator betrieben wird, wird mit der von der elektrischen Maschine 20, 22, 24, 110 erzeugte elektrische Energie mindestens eine der anderen elektrischen Maschinen angetrieben. Der elektrische Leistungsfluss erfolgt hierbei über die Versorgungsleitungen 148A bis 148D, welche zu einem Zwischenstromkreis der elektronischen Ansteuervorrichtung 144 gehören. Somit speist die als Generator betriebene elektrische Maschine 20, 22, 24 und/oder 110 den von ihr erzeugten elektrischen Strom in den Zwischenkreis ein bzw. stellt den elektrischen Strom der elektronischen Steuereinheit zur Verfügung. Mit diesem elektrischen Strom kann somit mindestens eine andere elektrische Maschine versorgt werden.

Im Folgenden wird auf drei bevorzugte Betriebsmodi eines Traktors eingegangen, der mit einem in den Fig. 1 bis 3 schematisch gezeigten Antriebssystem ausgestattet ist. Neben diesen drei bevorzugten Betriebsmodi sind weitere Betriebszustände des Traktors denkbar, auf die allerdings nicht explizit eingegangen wird.

In einem ersten Betriebszustand, der in dem Antriebssystem 10 gemäß den Fig. 2 und 3 möglich ist, wird die erste elektrische Maschine 20 als Generator betrieben. Die zweite und die dritte elektrische Maschine 22, 24 werden als Motor betrieben. Die Rotoren 34, 36 der zweiten und der dritten elektrischen Maschine 22, 24 sind mit der ersten mechanischen Ausgangsschnittstelle 16 verbunden, das heißt die Schaltstelle 56 befindet sich in ihrem linken eingerückten Zustand. Somit wird in diesem Betriebsmodus der Traktor lediglich durch die zwei elektrischen Maschinen 22, 24 angetrieben. Der erste Betriebsmodus ist für einen Fahrgeschwindigkeitsbereich eines Traktors von bis zu 25 km/h in Vorwärts- und Rückwärtsrichtung vorgesehen.

Dieser erste Betriebszustand ist auch in dem Antriebssystem 10 aus Fig. 1 möglich. Hierbei befindet sich die Schaltstelle 48 in ihrem linken eingerückten Zustand und die Schaltstelle 56 befindet sich in ihrem linken eingerückten Zustand. Somit sind die zwei elektrischen Maschinen 22, 24 über das Zahnrad 54 synchron miteinander gekoppelt und treiben die erste mechanische Ausgangsschnittstelle 16 an.

In einem zweiten Betriebszustand, der in dem Antriebssystem 10 gemäß den Fig. 2 und 3 möglich ist, ist mit einem Teil des von der Antriebsbaugruppe 12 erzeugten mechanischen Drehmoments die als Generator betriebene vierte elektrische Maschine 110 antreibbar. Mit der von der vierten elektrischen Maschine 110 erzeugten elektrischen Energie werden die zweite und dritte elektrische Maschine 22, 24 als Motor betrieben. Das von der zweiten und dritten elektrischen Maschinen 22, 24 erzeugte mechanische Drehmoment ist mit einem weiteren Teil des von der Antriebsbaugruppe 12 erzeugten mechanischen Drehmoments auf die erste mechanische Ausgangsschnittstelle 16 übertragbar. In diesem Betriebszustand befinden sich die Schaltstelle 56 in ihrem linken eingerückten und die Schaltstelle 78 in ihrem rechten eingerückten Zustand. Dementsprechend verzweigt sich das von der Antriebsbaugruppe 12 erzeugte mechanische Drehmoment in dem Summierungsgetriebe 58 einerseits auf die vierte elektrische Maschine 110 (über die Schnittstelle 60 des Planetengetriebes 58, das Hohlrad 66, den Planetenträger 74, das Sonnenrad 70, die Hohlwelle 68, das Zahnrad 62, die Welle 116 und das Zahnrad 118) und andererseits (über die Schnittstelle 60, das Hohlrad 66, den Planetenträger 74, die Hohlwelle 72, das Zahnrad 64, das Zahnrad 80 und somit) auf die Ausgangsschnittstelle 16. In diesem zweiten Betriebszustand wird das Antriebssystem 10 in einer "speed split"-Konfiguration betrieben. Der zweite Betriebszustand ist für eine langsame Vorwärtsfahrt bis ca. 25 km/h mit schwerer Zugarbeit eines Traktors gedacht.

Dieser zweite Betriebszustand wäre auch in dem Antriebssystem 10 gemäß Fig. 1 möglich, wenn die Schaltstellen 48 sich in ihrem rechten eingerückten Zustand befindet und Schaltstelle 56 sich in ihrem linken eingerückten Zustand befindet und wenn die Schaltstelle 78 sich in ihrem rechten eingerückten Zustand befindet. Dann ist mit einem Teil des von der Antriebsbaugruppe 12 erzeugten mechanischen Drehmoments die als Generator betriebene zweite elektrische Maschine 22 antreibbar. Mit der von der zweiten elektrischen Maschine 22 erzeugten elektrischen Energie wird die dritte elektrische Maschine 24 als Motor betrieben. Das von dritten elektrischen Maschinen 24 erzeugte mechanische Drehmoment ist mit einem weiteren Teil des von der Antriebsbaugruppe 12 erzeugten mechanischen Drehmoments (über die Schnittstelle 60, das Hohlrad 66, den Planetenträger 74, die Hohlwelle 72, die Zahnräder 64 und 80) auf die erste mechanische Ausgangsschnittstelle 16 übertragbar.

In einem dritten Betriebszustand, der in dem Antriebssystem 10 gemäß den Fig. 2 und 3 möglich ist, wird die erste elektrische Maschine 20 als Generator betrieben. Die vierte elektrische Maschine 110 wird als Motor betrieben. Das von der vierten elektrischen Maschine 110 erzeugte mechanische Drehmoment ist mit dem von der Antriebsbaugruppe 12 erzeugte mechanische Drehmoment in dem Summierungsgetriebe 58 summierbar auf die erste mechanische Ausgangsschnittstelle 16 übertragbar. In diesem Betriebszustand befindet sich die Schaltstelle 56 in ihren rechten nicht eingerückten Zustand und die Schaltstelle 78 in ihrem rechten eingerückten Zustand. In diesem zweiten Betriebszustand wird das Antriebssystem 10 in einer "torque Splitt-Konfiguration betrieben. Der dritte Betriebszustand ist für hohe Fahrgeschwindigkeiten eines Traktors gedacht, in welchem beispielsweise Geschwindigkeiten von 25 bis 50 km/h vorliegen.

Der dritte Betriebszustand ist auch in dem Antriebssystem 10 gemäß Fig. 1 denkbar. Die Schaltstelle 48 befindet sich in ihrem rechten eingerückten Zustand und die Schaltstelle 78 befindet sich in ihrem rechten eingerückten Zustand. Die erste elektrische Maschine 20 wird als Generator betrieben und die zweite elektrische Maschine 22 wird als Motor betrieben. Somit wird das von der zweiten elektrischen Maschine 22 erzeugte mechanische Drehmoment über die Welle 40 auf die Zahnräder 76, 62 auf das Summierungsgetriebe 58 übertragen und mit dem von der Antriebsbaugruppe 12 erzeugten und über die Antriebswelle 14 in das Summierungsgetriebe 58 eingegebene Drehmoment summiert über die Zahnräder 64, 80 auf die erste mechanische Ausgangsschnittstelle 18 übertragen.

In den drei zuvor beschriebenen Betriebsmodi ist in den in den Fig. 2 und 3 gezeigten Antriebssystemen 10 die vierte elektrische Maschine 110 als Motor betreibbar. Das von der vierten elektrischen Maschine 110 erzeugte Drehmoment kann auf die zweite mechanische Ausgangsschnittstelle 18 dann übertragen werden, wenn die Schaltstelle 86 sich in ihrem eingerückten Zustand befindet, die Lamellenkupplung 122 aus Fig. 3 eingerückt und entweder die Schaltstelle 90 oder die Schaltstelle 96 sich ebenfalls in ihrem eingerückten Zustand befindet. Somit wird das von der vierten elektrischen Maschine 110 erzeugte Drehmoment über die Welle 116, die Zahnräder 118, 62, die Hohlwelle 68, das Sonnenrad 70, den Planetenträger 74, die Welle 84 (bzw. die Wellen 84A und 84B aus Fig. 3) und entweder auf die Zahnradkette 92, 94 oder auf die Zahnradkette 98, 100 übertragen. Falls die Lamellenkupplung 82 aus Fig. 2 eingerückt ist, kann in dem Summierungsgetriebe 58 das von der vierten elektrischen Maschine 110 erzeugte mechanische Drehmoment mit einem Teil des von der Antriebsbaugruppe 12 erzeugten mechanischen Drehmoments auf die zweite mechanische Ausgangsschnittstelle 18 übertragen werden. Gleiches gilt, falls die Schaltstelle 120 aus Fig. 3 sich in ihrem linken eingerückten Zustand befindet. Dementsprechend ist die zweite mechanische Ausgangsschnittstelle 18 einerseits lediglich durch das von der vierten elektrischen Maschine 110 erzeugte Drehmoment antreibbar. Andererseits ist die zweite mechanische Ausgangsschnittstelle 18 von dem von der vierten elektrischen Maschine 110 und von einem Teil des von der Antriebsbaugruppe 12 erzeugten mechanischen Drehmoments summiert antreibbar.

Die zweite mechanische Antriebsschnittstelle 18 ist in vergleichbarer Weise mit dem Antriebssystem 10 aus Fig. 1 dann antreibbar, falls die Schaltstelle 48 sich in ihrem rechten eingerückten Zustand befindet und die zweite elektrische Maschine 22 als Motor betrieben wird. Dann wird nämlich das von der zweiten elektrischen Maschine erzeugte mechanische Drehmoment über die Zahnräder 76, 62 und die Hohlwelle 68 auf das Sonnenrad 70 des Summierungsgetriebes 58 übertragen. Über den Planetenträger 74 wird dieses Drehmoment bei eingerückter Schaltstelle 86 über die Welle 84 entweder über die Zahnradkette 92, 94 oder über die Zahnradkette 98, 100 auf die zweite mechanische Ausgangsschnittstelle 18 übertragen, je nachdem, ob die Schaltstelle 90 oder die Schaltstelle 96 sich in ihrem eingerückten Zustand befindet. Hierzu wäre zweckmäßigerweise die erste elektrische Maschine 20 als Generators und die dritte elektrische Maschine 24 als Motor zu betreiben und damit mit der dritten elektrischen Maschine 24 bei eingerückter Schaltstelle 78 mit der ersten Ausgangsschnittstelle 16 verbindbar.

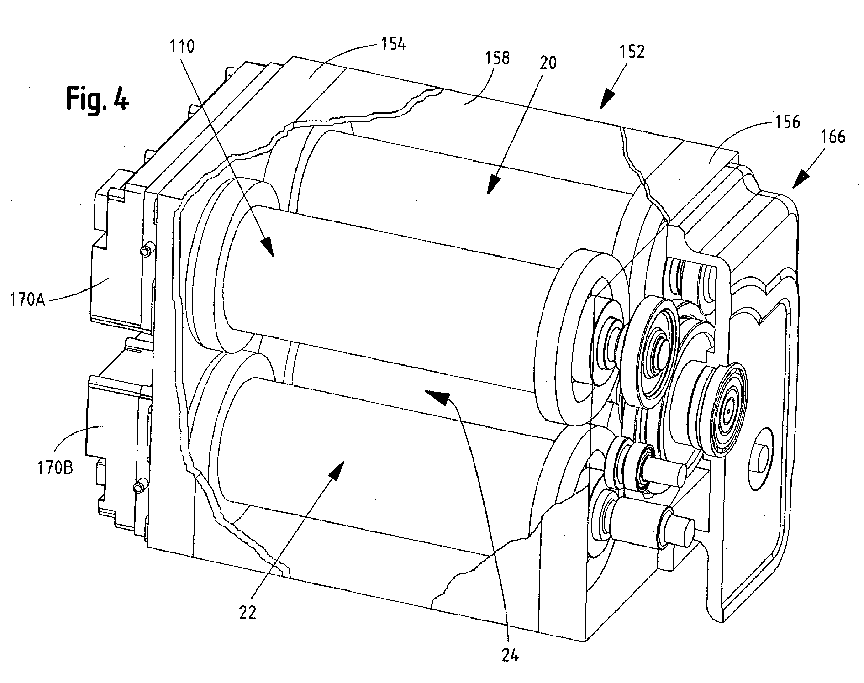

In Fig. 4 ist eine Gehäuseanordnung 152 gezeigt, in bzw. an welcher erfindungsgemäß die vier elektrischen Maschinen 20, 22, 24 und 110 angeordnet bzw. aufgenommen sind. Jeweils zwei elektrische Maschinen - z.B. 22, 24 der 110 - sind räumlich benachbart zueinander angeordnet. Die elektrische Maschine 20 ist jeweils benachbart zu den elektrischen Maschinen 110 und 24 sowie über die Diagonale zu der elektrischen Maschine 22 benachbart angeordnet. Dies gilt sinngemäß für die anderen drei elektrischen Maschinen 22, 24, 110.

Die Statoren 26, 28, 30, 112 der elektrischen Maschinen 20, 22, 24, 110 sind in der gemeinsamen Gehäuseanordnung 152 angeordnet. Die elektrischen Maschinen 20, 22, 24, 110 sind in der Gehäuseanordnung 152 derart angeordnet, dass die Wellen 38, 40, 42, 116 der Rotoren 32, 34, 36, 114 der elektrischen Maschinen 20, 22, 24, 110 auf einer Seite aus der Gehäuseanordnung 152 austreten. Die Gehäuseanordnung 152 weist zwei jeweils in Form eines Lagerschilds ausgebildete Abschlussteile 154, 156 auf. An den zwei Abschlussteilen 154, 156 sind die Statoren 26, 28, 30, 112 der vier elektrischen Maschinen 20, 22, 24, 110 befestigbar.

Das Abschlussteil 154 ist an einer Seite der Gehäuseanordnung 152 angeordnet. Das andere Abschlussteil 156 ist an der hierzu gegenüberliegenden Seite der Gehäuseanordnung 152 angeordnet.

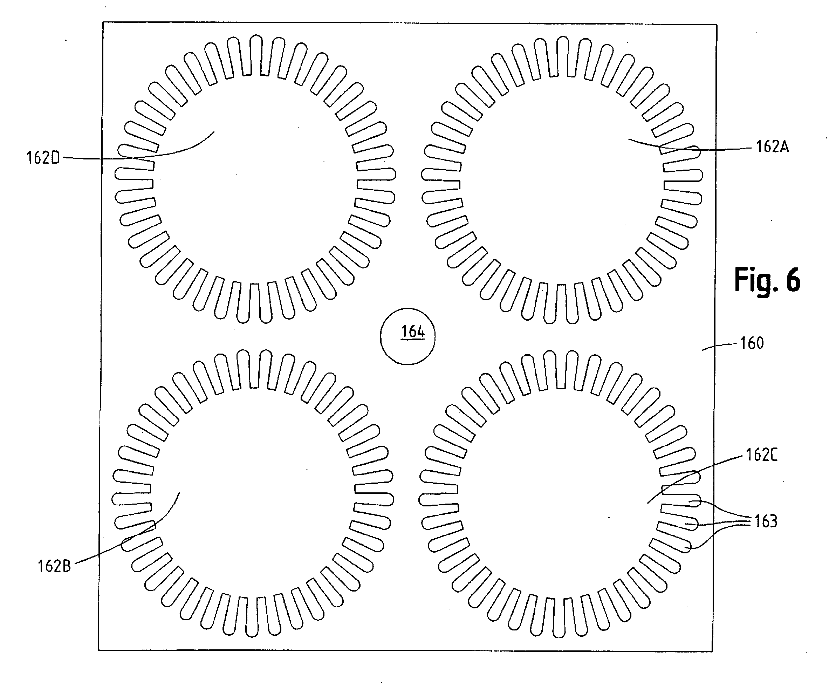

Die Gehäuseanordnung 152 weist einen mittleren Teil 158 auf, welcher eine die vier elektrischen Maschinen 20, 22, 24, 110 aufnehmende Metallkonstruktion aufweist. Die Metallkonstruktion in Form eines Metallstapelblocks ausgestaltet und weist einzelne zu einem Blechstapel zusammengefasste Bleche auf. Ein solches Blech 160 des den mittleren Teil 158 bildenden Blechstapels ist in Fig. 6 gezeigt. Das Blech 160 weist im Wesentlichen kreisförmige Aussparungen 162A bis 162D für die Statoren 26, 28, 30, 112 der vier elektrischen Maschinen 20, 22, 24, 110 auf. Die im Wesentlichen in radialer Richtung einer Aussparung 162A bis 162D angeordneten Nuten/Rillen 163 dienen zur Aufnahme der Statorwicklungen. Durch die Aussparung 164 verläuft die Antriebswelle 14. Entsprechende Aussparungen sind auch in den beiden Abschlussteilen 154, 156 vorgesehen. Somit erstreckt sich die Welle 14 durch die Gehäuseanordnung 152.

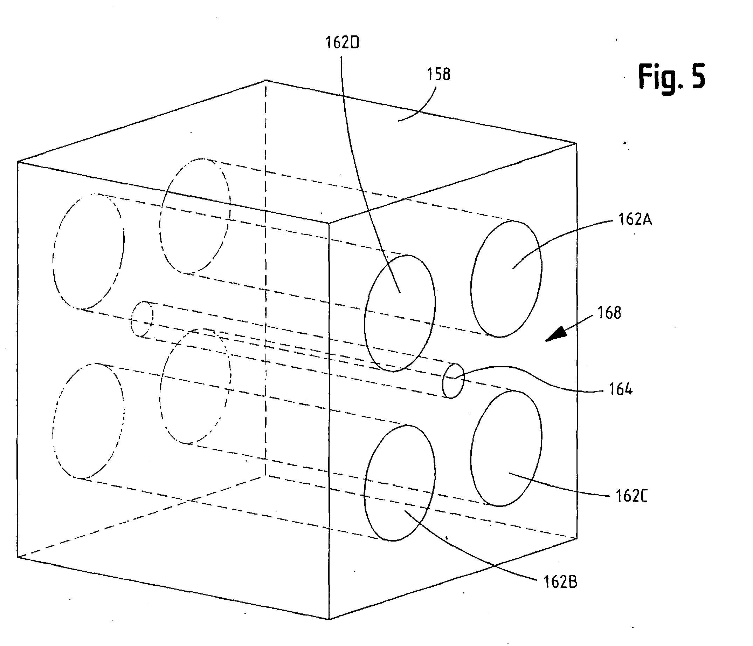

Fig. 5 zeigt den aus den einzelnen Blechen 160 zusammengesetzten mittleren Teil 158 der Gehäuseanordnung 152, wo zur einfacheren Darstellung die vier Aussparungen 162A bis 162D (ohne die Nuten/Rillen 163) für die vier elektrischen Maschinen 20, 22, 24, 110 sowie die mittig angeordnete Aussparung 164 für die Antriebswelle 14 erkennbar ist. Somit kann der mittlere Teil 158 der Gehäuseanordnung 152 dadurch gebildet werden, dass mehrere in Fig. 6 gezeigte Bleche 160 elektrisch isoliert voneinander auf die in Fig. 5 gezeigte Stirnseite 168 des mittleren Teils 158 montiert werden.

Die elektrischen Maschinen 20, 22, 24, 110 sind räumlich derart angeordnet, dass deren Wellen 38, 40, 42, 116 im Wesentlichen parallel zueinander orientiert sind und von einer Seite der Gehäuseanordnung 152 abragen, sie treten nämlich durch das rechte Abschlussteil 156 durch. Von dem mittleren Teil 158 aus rechts in Fig. 4 gesehen ist - lediglich schematisch - ein Teil der Getriebestruktur des beispielsweise in den Fig. 1 und 2 angedeuteten Getriebegehäuses 104 nachgeordnet, welches in Fig. 4 mit dem Bezugszeichen 166 gekennzeichnet ist. Von dem mittleren Teil 158 aus links in Fig. 4 gesehen sind - lediglich schematisch angedeutet - zwei Leistungselektronikbaugruppen 170A und 170B angedeutet, die an dem linken Abschlussteil 154 der Gehäuseanordnung 152 befestigt sind und welche jeweils mit den elektrischen Maschinen 20, 22, 24, 110 in elektrischer Verbindung stehen.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Antriebssystem für ein landwirtschaftliches oder industrielles Nutzfahrzeug, vorzugsweise für einen Traktor, mit einer ein mechanisches Drehmoment erzeugenden Antriebsbaugruppe (12), einer ersten, zweiten und dritten elektrischen Maschine (20, 22, 24), einer zum Antreiben mindestens einer Fahrzeugachse dienenden ersten mechanischen Ausgangsschnittstelle (16) und einer zweiten mechanischen Ausgangsschnittstelle (18), wobei eine elektrische Maschine (20, 22, 24, 110) einen Rotor (32, 34, 36, 114) aufweist, welcher drehfest mit einer Welle (38, 40, 42, 116) verbunden ist, wobei eine von der Antriebsbaugruppe (12) angetriebene Welle (14) mit der Welle (38) der ersten elektrischen Maschine (20) in Drehverbindung steht, wobei mit der zweiten Ausgangsschnittstelle (18) ein an das Nutzfahrzeug ankoppelbares Arbeitsgerät mechanisch betreibbar ist, wobei die Welle (40) der zweiten elektrischen Maschine (22) und/oder die Welle (42) der dritten elektrischen Maschine (24) reversibel mit der ersten mechanischen Ausgangsschnittstelle (16) verbindbar ist, **dadurch gekennzeichnet, dass** mindestens zwei der drei elektrischen Maschinen (20, 22, 24, 110) in einer gemeinsamen Gehäuseanordnung (152) angeordnet und/oder aufgenommen sind.

2. Antriebssystem nach Anspruch 1, **dadurch gekennzeichnet, dass** mindestens zwei der elektrischen Maschinen (20, 22, 24, 110) räumlich benachbart zueinander angeordnet.

3. Antriebssystem nach Anspruch 1 oder 2, **dadurch gekennzeichnet, dass** eine elektrische Maschine (20, 22, 24, 110) einen Stator (26, 28, 30, 112) aufweist und dass die Statoren (26, 28, 30, 112) mindestens zweier elektrischer Maschinen (20, 22, 24, 110) in der gemeinsamen Gehäuseanordnung (152) angeordnet sind.

4. Antriebssystem nach einem der Ansprüche 1 bis 3, **dadurch gekennzeichnet, dass** die elektrischen Maschinen (20, 22, 24, 110) in der Gehäuseanordnung (152) derart angeordnet sind, dass die Wellen (38, 40, 42, 116) der elektrischen Maschinen (20, 22, 24, 110) auf einer Seite aus der Gehäuseanordnung (152) austreten.

5. Antriebssystem nach einem der Ansprüche 1 bis 4, **dadurch gekennzeichnet, dass** die Gehäuseanordnung (152) mindestens ein -beispielsweise in Form eines Lagerschilds ausgebildetes - Abschlussteil (154, 156) aufweist, an welchem mindestens zwei elektrische Maschinen (20, 22, 24, 110) befestigbar sind.

6. Antriebssystem nach Anspruch 5, **dadurch gekennzeichnet, dass** die Gehäuseanordnung (152) zwei Abschlussteile (154, 156) aufweist, dass das eine Abschlussteil (154) an einer Seite der Gehäuseanordnung (152) angeordnet ist und dass das andere Abschlussteil (156) an der hierzu gegenüberliegenden Seite der Gehäuseanordnung (152) angeordnet ist.

7. Antriebssystem nach einem der Ansprüche 1 bis 6, **dadurch gekennzeichnet, dass** die Gehäuseanordnung (152) einen mittleren Teil (158) aufweist, welcher eine mindestens zwei elektrische Maschinen (20, 22, 24, 110) aufnehmende Metallkonstruktion aufweist, welche vorzugsweise in Form eines Metallstapelblocks ausgestaltet ist.

8. Antriebssystem nach einem der Ansprüche 1 bis 7, **dadurch gekennzeichnet, dass** die mindestens zwei elektrischen Maschinen (20, 22, 24, 110) von einer gemeinsamen Kühleinrichtung kühlbar sind, welche insbesondere zumindest teilweise in dem mittleren Teil (158) der Gehäuseanordnung (152) vorgesehen ist.

9. Antriebssystem nach einem der Ansprüche 1 bis 8, **dadurch gekennzeichnet, dass** mindestens zwei der elektrischen Maschinen (20, 22, 24, 110) räumlich derart angeordnet sind, dass deren Wellen (38, 40, 42, 116) im Wesentlichen parallel zueinander orientiert sind.

10. Antriebssystem nach einem der Ansprüche 1 bis 9, **dadurch gekennzeichnet, dass** mindestens zwei elektrische Maschinen (20, 22, 24, 110) derart in der Gehäuseanordnung (152) angeordnet sind, dass sie von einer Seite der Gehäuseanordnung (152) abragen.

11. Antriebssystem nach einem der Ansprüche 1 bis 10, **dadurch gekennzeichnet, dass** die Wellen (40, 42) der zweiten und dritten elektrischen Maschine (22, 24) synchron miteinander koppelbar sind, vorzugsweise über ein Zahnrad (54) .

12. Antriebssystem nach einem der Ansprüche 1 bis 11, **dadurch gekennzeichnet, dass** eine vierte elektrische Maschine (110) vorgesehen ist, die mit der ersten und/oder der zweiten mechanischen Ausgangsschnittstelle (16, 18) koppelbar ist und dass die vierte elektrische Maschine (110) vorzugsweise räumlich benachbart zu einer der ersten bis dritten elektrischen Maschine (20, 22, 24) angeordnet ist, insbesondere in der Gehäuseanordnung (152).

13. Antriebssystem nach einem der Ansprüche 1 bis 12, **dadurch gekennzeichnet, dass** zum Summieren des von der Antriebsbaugruppe (12) erzeugten Drehmoments und des von einer elektrischen Maschine (22, 24, 110) erzeugten Drehmoments ein Summierungsgetriebe (58) mit drei mechanischen Schnittstellen (60, 62, 64 bzw. 88) vorgesehen ist, dass die erste Schnittstelle (60) des Summierungsgetriebes (58) mit einer von der Antriebsbaugruppe (12) angetriebenen Welle (14) gekoppelt ist, dass die zweite Schnittstelle (62) des Summierungsgetriebes (58) mit der Welle (116; 40) einer elektrischen Maschine (110; 22) kuppelbar ist und dass die dritte Schnittstelle (64; 88) des Summierungsgetriebes (58) mit der ersten mechanischen Ausgangsschnittstelle (16) und/oder mit der zweiten mechanischen Ausgangsschnittstelle (18) des Antriebssystems (10) reversibel kuppelbar ist.

14. Antriebssystem nach Anspruch 13, **dadurch gekennzeichnet, dass** das Summierungsgetriebe (58) ein Planetengetriebe (58) aufweist, dass vorzugsweise die von der Antriebsbaugruppe (12) angetriebene Welle (14) mit dem Hohlrad (66) des Planetengetriebes (58) drehfest in Verbindung steht, dass der Planetenträger (74) des Planetengetriebes (58) reversibel mit der ersten Ausgangsschnittstelle (16) kuppelbar ist und dass das Sonnenrad (70) des Planetengetriebes (58) reversibel mit der zweiten, dritten oder vierten elektrischen Maschine (22, 24, 110) kuppelbar ist.

15. Antriebssystem nach Anspruch 14, **dadurch gekennzeichnet, dass** die Welle (116) der vierten elektrischen Maschine (110) mit dem Sonnenrad (70) des Planetengetriebes (58) in Drehverbindung steht.

16. Antriebssystem nach Anspruch 14 oder 15, **dadurch gekennzeichnet, dass** der Planetenträger (74) des Planetengetriebes (58) und/oder eine von der Antriebsbaugruppe (12) angetriebene Welle (14) reversibel mit der zweiten Ausgangsschnittstelle (18) kuppelbar ist, vorzugsweise mittels einer Lamellenkupplung (122) oder einer Klauenkupplung (86).

17. Antriebssystem nach einem der Ansprüche 1 bis 16, **dadurch gekennzeichnet, dass** zumindest eine der elektrischen Maschinen (20; 110) als Generator betreibbar ist und dass mit der von einer elektrischen Maschine (20; 110) erzeugten elektrischen Energie mindestens eine der beiden anderen elektrischen Maschinen (20, 22, 24, 110) antreibbar ist.

18. Antriebssystem nach einem der Ansprüche 17, **dadurch gekennzeichnet, dass** ein Zwischenstromkreis (144, 146, 148A bis 148D, 150A bis 150D, 170A, 170B) vorgesehen ist, in welchen eine als Generator betriebene elektrische Maschine (20, 110) den von ihr erzeugten elektrischen Strom einspeist und mit welchem mindestens eine elektrische Maschine (20, 22, 24, 110) mit elektrischem Strom versorgbar ist und dass vorzugsweise der Zwischenstromkreis (144, 146, 148A bis 148D, 150A bis 150D, 170A, 170B) einen Gleichstromkreis aufweist.

19. Antriebssystem nach einem der Ansprüche 1 bis 18, **dadurch gekennzeichnet, dass** die drei oder vier elektrischen Maschinen (20, 22, 24, 110) im Wesentlichen baugleich ausgebildet sind und/oder eine im Wesentlichen vergleichbare Leistungscharakteristik aufweisen.

20. Antriebssystem nach einem der Ansprüche 1 bis 19, **gekennzeichnet durch** einen ersten Betriebszustand, in welchem die erste elektrische Maschine (20) als Generator betrieben wird und die zweite und die dritte elektrische Maschine (22, 24) als Motor betrieben werden und mit der ersten mechanischen Ausgangsschnittstelle (16) verbunden sind.

21. Antriebssystem nach einem der Ansprüche 1 bis 20, **gekennzeichnet durch** einen zweiten Betriebszustand, in welchem mit einem Teil des von der Antriebsbaugruppe (12) erzeugten mechanischen Drehmoments die als Generator betriebene vierte elektrische Maschine (110) antreibbar ist, in welchem die zweite und dritte elektrische Maschine (22, 24) als Motor betrieben werden, und wobei das von der zweiten und dritten elektrischen Maschinen (22, 24) erzeugte mechanische Drehmoment mit einem weiteren Teil des von der Antriebsbaugruppe (12) erzeugten mechanischen Drehmoments auf die erste mechanische Ausgangsschnittstelle (16) übertragbar ist.

22. Antriebssystem nach einem der Ansprüche 1 bis 21, **gekennzeichnet durch** einen dritten Betriebszustand, in welchem die erste elektrische Maschine (20) als Generator betrieben wird, in welchem die vierte elektrische Maschine (110) als Motor betrieben wird und wobei das von der vierten elektrischen Maschine (110) erzeugte mechanische Drehmoment mit dem von der Antriebsbaugruppe (12) erzeugte mechanische Drehmoment summierbar auf die erste mechanische Ausgangsschnittstelle (16) übertragbar ist.

23. Antriebssystem nach einem der Ansprüche 1 bis 22, **dadurch gekennzeichnet, dass** die vierte elektrische Maschine (110) als Motor betreibbar ist und dass das von der vierten elektrischen Maschine (110) erzeugte Drehmoment und - falls eine entsprechende Kupplung (82, 120) eingerückt ist - zumindest ein Teil des von der Antriebsbaugruppe (12) erzeugten mechanischen Drehmoments auf die zweite mechanische Ausgangsschnittstelle (18) übertragbar ist.

24. Statoranordnung einer elektrischen Maschine (20), mit einer Aussparung (162A) zur Aufnahme eines Rotors (32) der elektrischen Maschine (20), **gekennzeichnet durch** mindestens eine weitere Aussparung (162B, 162C, 162D) zur Aufnahme mindestens eines weiteren Rotors (34, 36, 114), wobei vorzugsweise die Aussparungen (162B bis 162D) derart in der Statoranordnung (158) angeordnet sind, dass hierdurch eine Gehäuseanordnung (152) nach einem der Ansprüche 1 bis 23 realisierbar ist.

25. Landwirtschaftliches oder industrielles Nutzfahrzeug, insbesondere ein Traktor, **gekennzeichnet durch** ein Antriebssystem (10) nach einem der Ansprüche 1 bis 23.

## Claims

1. Drive system for an agricultural or industrial utility vehicle, preferably for a tractor, having a drive assembly (12) which generates a mechanical torque, a first, second and third electric machine (20, 22, 24), a first mechanical output interface (16) which serves to drive at least one vehicle axle, and a second mechanical output interface (18), wherein an electric machine (20, 22, 24, 110) has a rotor (32, 34, 36, 114) which is connected in a rotationally fixed fashion to a shaft (38, 40, 42, 116), wherein a shaft (14) which is driven by the drive assembly (12) has a rotational connection to the shaft (38) of the first electric machine (20), wherein an implement which can be coupled to the utility vehicle can be operated mechanically by means of the second output interface (18), wherein the shaft (40) of the second electric machine (22) and/or the shaft (42) of the third electric machine (24) can be connected in a reversible fashion to the first mechanical output interface (16), **characterized in that** at least two of the three electric machines (20, 22, 24, 110) are arranged and/or accommodated in a common housing arrangement (152).

2. Drive system according to Claim 1, **characterized in that** at least two of the electric machines (20, 22, 24, 110) are arranged spatially adjacent to one another.

3. Drive system according to Claim 1 or 2, **characterized in that** an electric machine (20, 22, 24, 110) has a stator (26, 28, 30, 112), and **in that** the stators (26, 28, 30, 112) of at least two electric machines (20, 22, 24, 110) are arranged in the common housing arrangement (152).

4. Drive system according to one of Claims 1 to 3, **characterized in that** the electric machines (20, 22, 24, 110) are arranged in the housing arrangement (152) in such a way that the shafts (38, 40, 42, 116) of the electric machines (20, 22, 24, 110) protrude from the housing arrangement (152) on one side.

5. Drive system according to one of Claims 1 to 4, **characterized in that** the housing arrangement (152) has at least one terminating part (154, 156), for example embodied in the form of an end plate, to which at least two electric machines (20, 22, 24, 110) can be attached.

6. Drive system according to Claim 5, **characterized in that** the housing arrangement (152) has two terminating parts (154, 156), **in that** the one terminating part (154) is arranged on one side of the housing arrangement (152), and **in that** the other terminating part (156) is arranged on the opposite side of the housing arrangement (152).

7. Drive system according to one of Claims 1 to 6, **characterized in that** the housing arrangement (152) has a central part (158) which has a metal structure which accommodates at least two electric machines (20, 22, 24, 110) and which is preferably embodied in the form of a block of stacked metal.

8. Drive system according to one of Claims 1 to 7, **characterized in that** the at least two electric machines (20, 22, 24, 110) can be cooled by a common cooling device which is provided, in particular, at least partially in the central part (158) of the housing arrangement (152).

9. Drive system according to one of Claims 1 to 8, **characterized in that** at least two of the electric machines (20, 22, 24, 110) are arranged spatially in such a way that the shafts (38, 40, 42, 116) thereof are oriented substantially parallel to one another.

10. Drive system according to one of Claims 1 to 9, **characterized in that** at least two electric machines (20, 22, 24, 110) are arranged in the housing arrangement (152) in such a way that they project from one side of the housing arrangement (152).

11. Drive system according to one of Claims 1 to 10, **characterized in that** the shafts (40, 42) of the second and third electric machines (22, 24) can be coupled synchronously to one another, preferably via a gearwheel (54).

12. Drive system according to one of Claims 1 to 11, **characterized in that** a fourth electric machine (110) is provided which can be coupled to the first and/or the second mechanical output interface (16, 18), and **in that** the fourth electric machine (110) is preferably arranged spatially adjacent to one of the first to third electric machines (20, 22, 24), in particular in the housing arrangement (152).

13. Drive system according to one of Claims 1 to 12, **characterized in that**, in order to sum the torque generated by the drive assembly (12) and the torque generated by an electric machine (22, 24, 110), a summing gear (58) is provided with three mechanical interfaces (60, 62, 64 and 88, respectively), **in that** the first interface (60) of the summing gear (58) is coupled to a shaft (14) which is driven by the drive assembly (12), **in that** the second interface (62) of the summing gear (58) can be coupled to the shaft (116; 40) of an electric machine (110; 22), and **in that** the third interface (64; 88) of the summing gear (58) can be reversibly coupled to the first mechanical output interface (16) and/or to the second mechanical output interface (18) of the drive system (10).

14. Drive system according to Claim 13, **characterized in that** the summing gear (58) has a planetary gear mechanism (58), **in that** the shaft (14) which is driven by the drive assembly (12) is preferably connected in a rotationally fixed fashion to the crown gear (66) of the planetary gear mechanism (58), **in that** the planetary carrier (74) of the planetary gear mechanism (58) can be reversibly coupled to the first output interface (16), and **in that** the sun gear (70) of the planetary gear mechanism (58) can be reversibly coupled to the second, third or fourth electric machine (22, 24, 110).

15. Drive system according to Claim 14, **characterized in that** the shaft (116) of the fourth electric machine (110) has a rotational connection to the sun gear (70) of the planetary gear mechanism (58).

16. Drive system according to Claim 14 or 15, **characterized in that** the planetary carrier (74) of the planetary gear mechanism (58) and/or a shaft (14) which is driven by the drive assembly (12) can be reversibly coupled to the second output interface (18), preferably by means of a multi-disc clutch (122) or a dog clutch (86).

17. Drive system according to one of Claims 1 to 16, **characterized in that** at least one of the electric machines (20; 110) can be operated as a generator, and **in that** the electric energy generated by one electric machine (20; 110) can be used to drive at least one of the two other electric machines (20, 22, 24, 110).

18. Drive system according to Claim 17, **characterized in that** an intermediate circuit (144, 146, 148A to 148D, 150A to 150D, 170A, 170B) is provided into which an electric machine (20, 110) which is operated as a generator feeds the electric current which is generated thereby, and with which at least one electric machine (20, 22, 24, 110) can be supplied with electric current, and **in that** the intermediate circuit (144, 146, 148A to 148D, 150A to 150D, 170A, 170B) preferably has a direct current circuit.

19. Drive system according to one of Claims 1 to 18, **characterized in that** the three or four electric machines (20, 22, 24, 110) are of substantially identical design and/or have substantially comparable power characteristics.

20. Drive system according to one of Claims 1 to 19, **characterized by** a first operating state in which the first electric machine (20) is operated as a generator, and the second and third electric machines (22, 24) are operated as a motor and are connected to the first mechanical output interface (16).

21. Drive system according to one of Claims 1 to 20, **characterized by** a second operating state in which the fourth electric machine (110) which is operated as a generator can be driven by means of a portion of the mechanical torque which is generated by the drive assembly (12), in which drive system the second and third electric machines (22, 24) are operated as motors, and wherein the mechanical torque which is generated by the second and third electric machines (22, 24) can be transmitted, with a further portion of the mechanical torque which is generated by the drive assembly (12), to the first mechanical output interface (16).

22. Drive system according to one of Claims 1 to 21, **characterized by** a third operating state in which the first electric machine (20) is operated as a generator, in which drive system the fourth electric machine (110) is operated as a motor, and wherein the mechanical torque which is generated by the fourth electric machine (110) can be transmitted, summed together with the mechanical torque which is generated by the drive assembly (12), to the first mechanical output interface (16).

23. Drive system according to one of Claims 1 to 22, **characterized in that** the fourth electric machine (110) can be operated as a motor, and **in that** the torque which is generated by the fourth electric machine (110) and - if a corresponding clutch (82, 120) is engaged - at least a portion of the mechanical torque which is generated by the drive assembly (12) can be transmitted to the second mechanical output interface (18).

24. Stator arrangement of an electric machine (20), having a cutout (162A) for accommodating a rotor (32) of the electric machine (20), **characterized by** at least one further cutout (162B, 162C, 162D) for accommodating at least one further rotor (34, 36, 114), wherein the cutouts (162B to 162D) are preferably arranged in the stator arrangement (158) in such a way that they can implement a housing arrangement (152) according to one of Claims 1 to 23.

25. Agricultural or industrial utility vehicle, in particular a tractor, **characterized by** a drive system (10) according to one of Claims 1 to 23.

## Revendications

1. Système d'entraînement pour véhicule utilitaire agricole ou industriel, de préférence pour un tracteur, qui présente
un ensemble d'entraînement (12) qui délivre un couple mécanique de rotation,
une première, une deuxième et une troisième machine électrique (20, 22, 24),
une première interface mécanique de sortie (16) qui sert à entraîner au moins un essieu du véhicule et une deuxième interface mécanique de sortie (18),
une machine électrique (20, 22, 24, 110) présentant un rotor (32, 34, 36, 114) relié à rotation solidaire à un arbre (38, 40, 42, 116),
un arbre (14) entraîné par l'ensemble d'entraînement (12) étant en liaison de rotation avec l'arbre (38) de la première machine électrique (20),
un appareil de travail apte à être accouplé au véhicule utilitaire pouvant être entraîné mécaniquement par la deuxième interface de sortie (18),
l'arbre (40) de la deuxième machine électrique (22) et/ou l'arbre (42) de la troisième machine électrique (24) pouvant être reliés de manière réversible à la première interface mécanique de sortie (16),
**caractérisé en ce que**
au moins deux des trois machines électriques (20, 22, 24, 110) sont disposées et/ou logées dans un ensemble commun de carter (152).

2. Système d'entraînement selon la revendication 1, **caractérisé en ce qu'**au moins deux des machines électriques (20, 22, 24, 110) sont disposées spatialement au voisinage l'une de l'autre.

3. Système d'entraînement selon la revendication 1 ou 2, **caractérisé en ce qu'**une machine électrique (20, 22, 24, 110) présente un stator (26, 28, 30, 112) et **en ce que** les stators (26, 28, 30, 112) d'au moins deux machines électriques (20, 22, 24, 110) sont disposés dans l'ensemble commun de carter (152).

4. Système d'entraînement selon l'une des revendications 1 à 3, **caractérisé en ce que** les machines électriques (20, 22, 24, 110) sont disposées dans l'ensemble de carter (152) de telle sorte que les arbres (38, 40, 42, 116) des machines électriques (20, 22, 24, 110) sortent de l'ensemble de carter (152) par un côté.

5. Système d'entraînement selon l'une des revendications 1 à 4, **caractérisé en ce que** l'ensemble de carter (152) présente au moins une pièce de fermeture (154, 156) configurée par exemple sous la forme d'un flasque, sur laquelle au moins deux machines électriques (20, 22, 24, 110) peuvent être fixées.

6. Système d'entraînement selon la revendication 5, **caractérisé en ce que** l'ensemble de carter (152) présente deux pièces de fermeture (154, 156), **en ce que** la pièce de fermeture (154) est disposée sur un côté de l'ensemble de carter (152) et **en ce que** l'autre partie de fermeture (156) est disposée sur le côté opposé de l'ensemble de carter (152).

7. Système d'entraînement selon l'une des revendications 1 à 6, **caractérisé en ce que** l'ensemble de carter (152) présente une partie centrale (158) qui présente une structure métallique qui loge au moins deux machines électriques (20, 22, 24, 110) et qui est configurée de préférence sous la forme d'un bloc métallique empilé.

8. Système d'entraînement selon l'une des revendications 1 à 7, **caractérisé en ce que** les deux ou plusieurs machines électriques (20, 22, 24, 110) peuvent être refroidies par un dispositif de refroidissement commun qui est prévu en particulier au moins en partie dans la partie centrale (158) de l'ensemble de carter (152).

9. Système d'entraînement selon l'une des revendications 1 à 8, **caractérisé en ce qu'**au moins deux des machines électriques (20, 22, 24, 110) sont disposées spatialement de telle sorte que leurs arbres (38, 40, 42, 116) soient orientés essentiellement en parallèle les uns aux autres.

10. Système d'entraînement selon l'une des revendications 1 à 9, **caractérisé en ce qu'**au moins deux machines électriques (20, 22, 24, 110) sont disposées dans l'ensemble de carter (152) de manière à déborder d'un côté de l'ensemble de carter (152).

11. Système d'entraînement selon l'une des revendications 1 à 10, **caractérisé en ce que** les arbres (40, 42) de la deuxième et de la troisième machine électrique (22, 24) peuvent être accouplés de manière synchronisée l'un par rapport à l'autre, de préférence par l'intermédiaire d'un pignon (54).

12. Système d'entraînement selon l'une des revendications 1 à 11, **caractérisé en ce qu'**il présente une quatrième machine électrique (110) qui peut être accouplée à la première et/ou à la deuxième interface mécanique de sortie (16, 18) et **en ce que** la quatrième machine électrique (110) est disposée spatialement de préférence au voisinage de l'une parmi la première à la troisième machine électrique (20, 22, 24), en particulier dans l'ensemble de carter (152).

13. Système d'entraînement selon l'une des revendications 1 à 12, **caractérisé en ce que** pour additionner le couple de rotation délivré par l'ensemble d'entraînement (12) et le couple de rotation délivré par une machine électrique (22, 24, 110), il présente une transmission additive (58) qui compte trois interfaces mécaniques (60, 62, 64 ou 88), **en ce que** la première interface (60) de la transmission additive (58) est accouplée à un arbre (14) entraîné par l'ensemble d'entraînement (12), **en ce que** la deuxième interface (62) de la transmission additive (58) peut être accouplée à l'arbre (116; 40) d'une machine électrique (110; 22) et **en ce que** la troisième interface (64; 88) de la transmission additive (58) peut être accouplée de manière réversible à la première interface mécanique de sortie (16) et/ou à la deuxième interface mécanique de sortie (18) du système d'entraînement (10).

14. Système d'entraînement selon la revendication 13, **caractérisé en ce que** la transmission additive (58) présente une transmission à planétaire (58), **en ce que** de préférence l'arbre (14) entraîné par l'ensemble d'entraînement (12) est relié à rotation solidaire à la roue creuse (66) de la transmission à planétaire (58), **en ce que** le porte-planétaire (74) de la transmission à planétaire (58) peut être accouplé de manière réversible à la première interface de sortie (16) et **en ce que** la roue solaire (70) de la transmission à planétaire (58) peut être accouplée de manière réversible à la deuxième, la troisième ou la quatrième machine électrique (22, 24, 110).

15. Système d'entraînement selon la revendication 14, **caractérisé en ce que** l'arbre (116) de la quatrième machine électrique (110) est relié à rotation à la roue solaire (70) de la transmission à planétaire (58).

16. Système d'entraînement selon la revendication 14 ou 15, **caractérisé en ce que** le porte-planétaire (74) de la transmission à planétaire (58) et/ou un arbre (14) entraîné par l'ensemble d'entraînement (12) peuvent être accouplés de manière réversible à la deuxième interface de sortie (18), de préférence au moyen d'un accouplement à lamelles (122) ou d'un accouplement à griffes (86).

17. Système d'entraînement selon l'une des revendications 1 à 16, **caractérisé en ce qu'**au moins l'une des machines électriques (20; 110) peut être utilisée en tant que générateur et **en ce que** l'énergie électrique délivrée par une machine électrique (20; 110) permet d'entraîner au moins l'une des deux autres machines électriques (20, 22, 24, 110).

18. Système d'entraînement selon la revendication 17, **caractérisé en ce qu'**il présente un circuit intermédiaire de courant (144, 146, 148A à 148D, 150A à 150D, 170A, 170B) dans lequel une machine électrique (20, 110) utilisée en tant que générateur injecte le courant électrique qu'elle produit et à l'aide duquel au moins une machine électrique (20, 22, 24, 110) peut être alimentée en courant électrique, et **en ce que** le circuit intermédiaire de courant (144, 146, 148A à 148D, 150A à 150D, 170A, 170B) présente de préférence un circuit à courant continu.

19. Système d'entraînement selon l'une des revendications 1 à 18, **caractérisé en ce que** les trois ou quatre machines électriques (20, 22, 24, 110) ont essentiellement la même structure et/ou présentent des caractéristiques de puissance essentiellement comparables.

20. Système d'entraînement selon l'une des revendications 1 à 19, **caractérisé par** un premier mode de fonctionnement dans lequel la première machine électrique (20) est utilisée comme générateur et la deuxième et la troisième machine électrique (22, 24) sont utilisées comme moteurs et sont reliées à la première interface mécanique de sortie (16).

21. Système d'entraînement selon l'une des revendications 1 à 20, **caractérisé par** un deuxième mode de fonctionnement dans lequel la quatrième machine électrique (110) utilisée comme générateur peut être entraînée par une partie du couple mécanique de rotation délivré par l'ensemble d'entraînement (12), dans lequel la deuxième et la troisième machine électrique (22, 24) sont utilisées comme moteurs, le couple mécanique de rotation délivré par la deuxième et la troisième machine électrique (22, 24) pouvant être transmis avec une autre partie du couple mécanique de rotation délivré par l'ensemble d'entraînement (12) à la première interface mécanique de sortie (16).

22. Système d'entraînement selon l'une des revendications 1 à 21, **caractérisé par** un troisième mode de fonctionnement dans lequel la première machine électrique (20) est utilisée comme générateur, dans lequel la quatrième machine électrique (110) est utilisée comme moteur, le couple mécanique de rotation délivré par la quatrième machine électrique (110) pouvant être additionné au couple mécanique de rotation délivré par l'ensemble d'entraînement (12) et pouvant être transmis à la première interface mécanique de sortie (16).

23. Système d'entraînement selon l'une des revendications 1 à 22, **caractérisé en ce que** la quatrième machine électrique (110) peut être utilisée comme moteur et **en ce que** le couple de rotation délivré par la quatrième machine électrique (110) et, au cas où un accouplement approprié (82, 120) est embrayé, au moins une partie du couple mécanique de rotation délivré par l'ensemble d'entraînement (12) peut être transmis à la deuxième interface mécanique de sortie (18).

24. Ensemble de stator pour machine électrique (20), doté d'une découpe (162A) de reprise d'un rotor (32) de la machine électrique (20), **caractérisé par** au moins une autre découpe (162B, 162C, 162D) qui reprend au moins un autre rotor (34, 36, 114), les découpes (162B à 162D) étant disposées dans l'ensemble de stator (158) de préférence de manière à pouvoir réaliser ainsi un ensemble de carter (152) selon l'une des revendications 1 à 23.

25. Véhicule utilitaire agricole ou industriel, en particulier tracteur, **caractérisé par** un système d'entraînement (10) selon l'une des revendications 1 à 23.
